(19) Europäisches Patentamt / European Patent Office / Office européen des brevets

(11) **EP 4 814 643 A2**

(12) **EUROPEAN PATENT APPLICATION**

(43) Date of publication:
**30.09.2026 Bulletin 2026/40**

(21) Application number: **26166633.3**

(22) Date of filing: **23.03.2026**

(51) International Patent Classification (IPC):
***G05D 1/43*** *(2024.01)* ***B63H 25/00*** *(2006.01)*
***G05D 1/644*** *(2024.01)* *G05D 101/15 (2024.01)*
*G05D 105/22 (2024.01)* *G05D 107/00 (2024.01)*
*G05D 109/30 (2024.01)*

(52) Cooperative Patent Classification (CPC):
**G05D 1/644; B63H 25/00;** G05D 2101/15; G05D 2105/22; G05D 2107/27; G05D 2109/34

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.03.2025 IT 202500006075**

(71) Applicant: **ULTRAFLEX S.P.A.**
**16015 Casella (GE) (IT)**

(72) Inventor: **GAI, Marcella**
**16015 CASELLA (GE) (IT)**

(74) Representative: **Karaghiosoff, Giorgio Alessandro**
**c/o Praxi Intellectual Property S.p.A. - Savona**
**Via F. Baracca 1R, 4° piano**
**"Il Gabbiano"**
**17100 Savona (IT)**

(54) **A SYSTEM AND METHOD FOR CONTROLLING THE NAVIGATION OF A VESSEL, AND A VESSEL COMPRISING SAID SYSTEM, THE SYSTEM INCLUDING STEERING CONTROL MEANS, MEANS FOR CONTROLLING THE DIRECTION OF TRAVEL, MEANS FOR CONTROLLING THE POWER OUTPUT DELIVERED BY A PROPULSION UNIT, AND MEANS FOR CONTROLLING THE TRIM OR STABILIZATION OF THE VESSEL**

(57) Navigation control system of a vessel, with operating units configured to perform navigation control operations and constituted by:
- at least one steering unit of the vessel for setting a route;
- at least one unit for controlling the condition of forward gear, reverse gear, and neutral of said propulsion system and at least one unit for regulating the propulsive thrust generated by the propulsion unit;
- one or more trim adjustment units of the vessel that modify the static and/or dynamic floating trim of the hull in the water;
- a control unit that processes the signals of one or more command signal generating members of said units, generating actuation signals of one or more actuators and/or of one or more control members configured to influence one or more of said navigation conditions relating to the steering of the vessel, to the condition of forward/reverse gear or neutral of the propulsion unit and/or of the thrust power delivered by said propulsion unit and of the setting of the dynamic trim adjustment unit or units of the vessel;
- said control unit executes a control software that comprises the instructions for calculating the actuation signals of one or more actuators of one or more of said operating units for controlling the navigation conditions as a function of one or more of said command signals generated by means of said command signal generating members by means of an artificial intelligence algorithm.

EP 4 814 643 A2

Fig. 1
3
9’
10’
2
24
1
12
31
29
22
21
20
13
8
28
30
14
11
15
17
16
25
25
4
26
23
26
101
9
10
05
06
05
06
100
7

## Description

The present invention relates to a navigation control system of a vessel and a vessel comprising said system.

In the present description and in the claims, the term vessel is to be understood in a broad sense and encompasses any type of floating vehicle that can be governed according to the characteristics of the method and of the system which are the subject of the present description.

The navigation control systems of vessels have long been enriched with a large number of different operating units both in the form of sensors adapted to detect parameters characterizing the state of the navigation conditions and in the form of systems adapted to exert actions that modify the operating status of the vessel in response to the detected navigation conditions, both manually, automatically, or semi-automatically.

Currently, the main navigation control systems of a vessel comprise different operating units, each of which is intended to modify the behavior of the vessel with respect to a specific parameter characterizing a navigation condition and/or a specific group of said parameters. These operating units are currently controlled independently of one another by means of dedicated command signal generating members of respective actuators specific to each different control member.

The complexity of navigation control systems varies from type to type of vessel, especially with reference to the size of the vessel, since for relatively small vessels, with or without a cabin or semi-cabin, the cost of acquisition and installation of a complex navigation system can reach high values, and the skills of the pilot must also be commensurate with the complexity of the system.

The simplest configurations of vessel control systems comprise operating units configured to perform essential navigation control operations, said operating units comprising:

- steering unit of the vessel for setting a route comprising one or more rudders and/or one or more propulsion jet directing members for directing the propulsion jet generated by a propulsion system provided with at least one engine or with two or more main engines and optionally also with one or more auxiliary directional engines;

unit for controlling the condition of forward gear, reverse gear, and neutral or idle of said propulsion system and a unit for regulating the propulsive thrust generated by the propulsion unit, that is by said one engine or by said two or more engines in a synchronized manner or independently of one another.

Said navigation control units are often combined with one another, also in a manner that is not native to the vessel, but due to a subsequent upgrade of one or more trim adjustment units of the vessel such as so-called trim tabs and/or interceptors and/or trim adjustment members of other types.

Optionally, but not necessarily, stabilization units of the vessel with respect to pitch and/or roll movements are also currently under development, such as gyroscopic stabilizers configured to operate on vessels of the above-defined product segment.

The aforesaid units are controllable by means of command signal generating members, which signals are processed by a control unit into corresponding actuation signals for the actuators provided for said various operating units and intended to actuate control members of the vessel with respect to one or more characteristic parameters of a navigation condition.

In many cases, but not necessarily, each of said operating units is provided in combination with one or more sensors intended to detect the actual values of one or more characteristic parameters of one or more navigation conditions that are modifiable by means of said operating unit, one or more sensors of the operating state of the operating unit itself with respect to the state of the command signal generating member or members, and/or the characteristic parameters of the command signal, and/or one or more sensors of the state of the actuators for actuating the control members and/or of the state of the control members themselves, while the control unit is configured, by means of software encoding the corresponding instructions, to transform the command signals into actuation signals of the actuator or actuators and to monitor the variation of the navigation conditions determined on the basis of said command signals as a function of the detection signals of said one or more sensors.

The command signal generating members may be members that are manually actuable by a human operator, or they may be automatic members, the control unit being optionally configurable also to automatically generate at least some command signals as a function of the parameters measured by said one or more sensors and/or based on a selection of navigation modes set by the user or automatically activated, again as a function of the measured values of one or more of the aforesaid status parameters. Such a level of functionality, however, requires a high-performance control unit and therefore also of high costs that not all owners of small or medium-sized vessels consider.

Among the status parameters of the navigation conditions, it is possible to include parameters relating to one or more of the following conditions and measurable by means of one or more corresponding sensors:

- trim conditions of the vessel in the water,

- stabilization conditions of the vessel,
- wave motion conditions with respect to frequency, amplitude, and direction of propagation of the wave motion,
- conditions of external forces acting on the vessel, such as direction and intensity of currents and/or wind,
- value of the angle of orientation of the longitudinal axis of the vessel with respect to the direction of travel along a route and/or with respect to the direction of propagation of the wave front and/or of one or more of the aforesaid external forces,
- conditions of positioning of the engine or engines constituting the propulsion system with respect to the hull of the vessel, which may comprise one or a combination of two or more of the following items:
    - upward or downward translations of said engine or engines with respect to the hull,
    - translations of said engine or engines along a direction transverse to the longitudinal axis of the vessel,
    - translations of said engine or engines along the direction of the longitudinal axis of the vessel,
    - tilting of the engine or engines about an oscillation axis parallel to the longitudinal axis of the vessel,
    - tilting of the engine or engines about a transverse axis with respect to the longitudinal axis of the vessel and horizontal, known as "tilt".

In addition to the aforesaid navigation conditions of a vessel, conditions relating to the position or the distance of the vessel from barriers or geographical elements or from man-made structures such as docks or the like, or simply from fixed points having predetermined coordinates, may also be provided.

Currently, the operating units for controlling the navigation conditions of vessels are activated independently of one another or possibly in a synchronized manner, substantially through a human intervention, on the various command signal generating members of the actuators of the different control members.

However, experience relating to the navigation control of vessels teaches that the navigation control effects exerted by the different operating units are dynamically interconnected with one another, and furthermore that said effects also depend on external environmental conditions such as the characteristics of the wave motion, those of the wind, and those of the currents, as well as further also on the navigation modes such as cruising navigation, fast navigation, docking and/or approach navigation, navigation aimed at maintaining a position and/or an orientation of the longitudinal axis of the vessel, and other modes alternative to those listed or combinations of these modes.

To date, it is not possible to configure a control software in such a way that this control software can automatically proceed to generate command signals for two or more operating units as a function of the navigation conditions of the vessel and/or optionally also of those of the external environment and following a command generated for a single operating unit, in such a way as to optimize the navigation condition of the vessel not only with reference to the parameter modified by the command signal generated for said one operating unit, but with reference to one or more further operating units and to the navigation conditions both relating to the vessel itself and relating to environmental effects such as, for example, wind, currents, and/or wave motion.

Furthermore, considering the possibility of having a considerable number of sensors, command signal generating members, actuators, and control members, a system of the type comprising one or more of said sensors, one or more of said command signal generating members, one or more of said actuators, one or more of said control members, and at least one processing unit for processing the command signals and/or the signals of said one or more sensors and the actuation signals of said actuators, requires a complex and lengthy initial setup procedure that provides for the various weighting coefficients of the values detected by the sensors and different types of transfer functions of the command signals of the command signal generating members into the corresponding actuation signals of the actuators, which functions also contain as variables the values of the parameters measured by one or more of said status sensors with the respective weighting coefficients.

In this case, it should also be considered that the behavior of vessels differs from vessel to vessel and also within the same vessel, the dynamic behavior thereof is affected by the loading conditions of the vessel due both to the number of passengers and/or also merely to the filling condition of the tanks and/or to the presence of other types of load.

Document JP2007191138 describes an automatic route control system that manages steering and propulsion, uses route and/or hull orientation sensors, and corrects the dynamic trim as a function of the conditions. The fundamental principle on which this system is based consists in the fact that when the boat is subjected to a heeling angle, the pilot generally tends to compensate for it by steering. However, this causes the direction of travel not to coincide with the bow direction, increasing the hydrodynamic resistance and reducing the propulsion efficiency.

The solution proposed by the aforesaid document avoids the aforesaid drawbacks by automatically controlling the trim of the engines to create a difference in lift that restores the correct angle, that is, the system automatically modifies

the "posture" of the boat so that the pilot does not have to compensate for the heeling by steering.

Going into greater detail of the system according to the aforesaid document, this system is configured to continuously acquire the steering angle from the helm wheel, detect a measurement of the heeling angle, regulate the trim of the outboard engines to increase or reduce the lift on one side and thus compensate for the heeling angle in order to maintain the correct direction and realign the direction of travel with the bow orientation direction of the vessel.

Document WO2019/126755 describes systems, methods, and computer-readable media for generating and applying training data to machine learning systems and for the autonomous operation of surface and underwater vessels. The systems, methods, and computer-readable media may include a data source that provides one or more of vehicle data, operational data, and environmental data, and may further include a processor that analyzes at least the data from the data source and generates one or more control outputs based at least in part on the analysis. Document WO2019/126755A1 addresses a central problem in autonomous systems: the need for reliable, variable, and correctly classified data to train machine learning models, especially in dynamic contexts such as autonomous navigation, and proposes a system that generates, classifies, and uses training data to improve the decision-making and control capabilities of autonomous marine vehicles, including both surface vessels and underwater vessels. Document WO2019/126755A1 does not address the technical problem of the dynamic interferences on the control of the navigation conditions of a vessel among different operating units primarily intended to regulate different navigation conditions, such as steering actuators, engine or rudder direction systems, engine trim control, flap or stabilizer control, hull trim correction systems. These dynamic interactions on the control of the navigation conditions of a vessel are completely ignored and therefore the automatic control commands of a vessel obtained with the system according to WO2019/126755A1 do not offer any guarantee with respect to the effects they may have on the different navigation conditions of the vessel, such as, for example, the effects of a course change on the trim of the vessel with respect to a heeling angle and other similar interactions.

The present invention is therefore based on the problem of providing a navigation control system of a vessel and a vessel comprising said system in such a way as to allow the control of the navigation conditions by means of a synchronized actuation of one or more different operating units for controlling the navigation conditions present thereon and as a function of boundary conditions defined by measured values of the characteristic parameters for describing the navigation conditions and/or of parameters set by a control operator, and in such a way that the commands generated and transmitted to the actuators for varying the navigation conditions, such as, for example, variations of the steering angle of the engines or rudders, variations of the engine trim, variations of the hull trim correctors (flaps, tabs, spoilers, ballast) and/or variations of the action of further control members of the navigation conditions, such as also one or more stabilizers, are such as to manage in a synchronized manner all the operating units for controlling the navigation conditions of the vessel, avoiding conflicting effects of said units among one another and effectively preventing the system from using commands that are physically impossible or incompatible with the dynamics of the vessel, in particular from the standpoint of safety.

The present invention relates to a navigation control system of a vessel, which system comprises operating units configured to perform essential navigation control operations, said operating units comprising:

- at least one steering unit of the vessel for setting a route comprising one or more rudders and/or one or more propulsion jet directing members of the propulsion jet or jets generated by a propulsion system provided with at least one engine or with two or more main engines and optionally also with one or more auxiliary directional engines;

  at least one unit for controlling the condition of forward gear, reverse gear, and neutral of said propulsion system and at least one unit for regulating the propulsive thrust generated by the propulsion unit, that is by said at least one engine or by said two or more engines both in a synchronized manner and in an independent manner;

  one or more trim adjustment units of the vessel that modify the static and/or dynamic floating trim of the hull in the water;

  a control unit that processes the signals of one or more command signal generating members of said units, generating actuation signals of one or more actuators and/or of one or more control members configured to influence one or more of said navigation conditions relating to the steering of the vessel, to the condition of forward/reverse gear or neutral of the propulsion unit, that is of said at least one engine or of said two or more engines and/or of the thrust power delivered by said propulsion unit, that is of said at least one engine and/or of said two or more engines and of the setting of the dynamic trim adjustment unit or units of the vessel;

  in said control unit being loaded and executed by said control unit a control software that comprises the instructions for calculating the actuation signals of one or more actuators of one or more of said operating units for controlling the navigation conditions as a function of one or more of said command signals generated by means of said command signal generating members by means of an artificial intelligence algorithm and wherein said control unit comprising a communication interface with at least one or more sensors for measuring characteristic parameters of the navigation conditions relating to the vessel and/or relating to the external

environment and said artificial intelligence software is configured to calculate the actuation signals of the actuators of said control members of said operating units for steering control and/or for forward gear, reverse gear, and neutral of said propulsion system and at least one unit for regulating the propulsive thrust generated by the propulsion unit, that is by said at least one engine or by said two or more engines both in a synchronized manner and in an independent manner and of said trim control members of the vessel also as a function of the signals of the sensors for measuring said characteristic parameters of the navigation conditions,
which artificial intelligence software comprises an artificial intelligence algorithm constituted by at least one of:

a digital model in which each navigation condition is represented as a point in a multidimensional space, having one dimension for each characteristic parameter of the input and output data,
an output data selection process obtained by minimizing a distance metric between the point representing the input values and the points of a database of known cases classified on the basis of the quality of the navigation obtained;
and/or a reinforcement learning algorithm configured to determine the command signals of multiple operating units as a function of the reward calculated on the basis of the difference between target conditions and actual conditions achieved;
and/or a GAN architecture comprising a generator that produces possible output vectors and a discriminator trained to evaluate whether such vectors are compatible with real or optimal navigation conditions;
and wherein the control unit provides, as output, command signals intended for the actuators of said operating units to achieve a target navigation condition.

In other words, the system according to the present invention is a navigation control system of a vessel, comprising a control unit configured to:

a) acquire input data vectors relating to characteristic parameters of the navigation condition, comprising at least one of:

- steering state,
- propulsion power,
- direction of travel,
- operating state of trim adjustment units of the vessel,
- environmental or operating state parameters of the sensors of the vessel;

b) execute an artificial intelligence algorithm configured to generate the command signals intended for at least two of: steering unit, forward/reverse/neutral gear control unit, propulsion power regulation unit, trim adjustment unit of the vessel, gyroscopic stabilizers;
c) in which the artificial intelligence algorithm comprises at least one of:

a digital model in which each navigation condition is represented as a point in a multidimensional space, having one dimension for each characteristic parameter of the input and output data,
an output data selection process obtained by minimizing a distance metric between the point representing the input values and the points of a database of known cases classified on the basis of the quality of the navigation obtained;

d) and/or a reinforcement learning algorithm configured to determine the command signals of multiple operating units as a function of the reward calculated on the basis of the difference between target conditions and actual conditions achieved;
e) and/or a GAN architecture comprising a generator that produces possible output vectors and a discriminator trained to evaluate whether such vectors are compatible with real or optimal navigation conditions;
f) in which the control unit provides, as output, command signals intended for the actuators of said operating units to achieve a target navigation condition.

Optionally, but not necessarily, stabilization units of the vessel with respect to pitch and/or roll movements are also currently under development, such as gyroscopic stabilizers configured to operate on vessels also of small and/or medium dimensions, said optional gyroscopic stabilization units being provided with a communication interface with said control unit, the control software comprising instructions for generating control signals of said stabilization units generated as a function both of the command signals of the operating units for steering and/or for forward gear, reverse gear, neutral, for regulating the propulsion power and of the trim adjustment units and/or also of said one or more parameters of the

navigation conditions measured by said sensors.

Although the configuration of the system defined above is indicated as being directed to small and medium-sized vessels, such motivation shall not be considered limiting for the application of the aforesaid configurations also to vessels of any size and intended for any purpose of use.

With regard to the steering units, these may be provided with members that rotate at least one rudder blade and/or at least the propeller axis of at least one engine or the propeller axes of two or more engines about a substantially vertical axis and/or having a predominant directional component in the vertical direction. The rotation of two or more rudders or of two or more engines may be controlled so as to be substantially identical and/or synchronous for all the engines and/or rudders provided, or said rotation may be executed with different angular paths or steering angles for each rudder and/or for each engine.

With regard to the control members for forward or reverse gear or neutral of one or more engines forming a propulsion unit, this may be controlled by means of traditional levers. Said levers may also generate commands for varying the propulsion power delivered by said one or more engines. Also in this case, when two or more engines are provided, the direction of travel, or the neutral condition of the engines, may be set identically for said two or more engines or differently for at least a part of said engines. This also applies to the setting of the propulsion power thereof.

In the present description, the terms propulsion power, engine acceleration, and propeller speed always refer to the same condition of regulation of the force or intensity of the thrust exerted on the hull with respect to the water in which it is immersed.

With regard to the trim adjustment devices, these may be of any type existing in the state of the art. Known types of trim adjustment devices are so-called trim tabs or so-called interceptors. However, these are merely non-limiting and non-exhaustive examples, as any unit that operates so as to vary the trim of the hull in the water is encompassed by the term. Therefore, this term may also include trim adjustment units that, for example, modify the distribution of static masses along the length and/or the width of the vessel.

According to a further feature that may be provided in combination with one or more of the features and variants described above, the operating units may comprise sensors for detecting the operating state and/or the rate of variation of said operating state thereof, such as, for example, a steering angle, a position of the command lever setting actuator of the gear condition of the engine or engines of the propulsion unit, the angular position of the command lever that generates the propulsion power regulation signals and/or of the actuators for actuating the member of the engine or engines for setting the delivered propulsion power, the operating condition of the trim adjustment unit or units, such as, for example, the angle of a trim tab with respect to the hull of the vessel and/or the operating conditions of the stabilization member or members and/or the rate of variation of said operating conditions.

In this case, the control unit may be provided with a communication interface with said sensors and the artificial intelligence algorithm is configured to calculate the actuation signals of said one or more actuators of the control members of the steering unit or units, of the unit or units for setting the direction of travel or neutral, of the unit or units for setting the propulsion power, of the stabilization unit or units and/or of one or more of the optional additional operating units for controlling the navigation conditions also as a function of said operating state signals of said operating units and/or of the actuators and/or of the control members thereof.

In a particular embodiment, the navigation condition control system and in particular the control unit is configured to acquire the actual values of one or more of the characteristic parameters of the navigation condition and/or the command signals of one or more of the command signal generating members and/or the corresponding actuation signals of the actuators of one or more control members relating to the steering conditions, the forward gear, reverse gear, neutral conditions, delivered propulsion power, and stabilization conditions at a corresponding time instant, and to define the target values of said one or more characteristic parameters of the navigation condition and/or the target command signals of one or more of the command signal generating members and/or the corresponding target actuation signals of the actuators of one or more control members at a subsequent time instant, the command signals of one or more command signal generating members and the corresponding actuation signals of the actuator or actuators of one or more of said control members being calculated by means of said artificial intelligence algorithm for achieving a navigation condition corresponding to the target navigation condition or as close thereto as possible.

As will be described in greater detail below, according to a feature of the present invention, the digital model comprises:

- a database of known cases containing combinations of input and output vectors associated with navigation quality values,
- a clustering algorithm for clustering the known cases into quality classes,
- a metric configured to measure the distance in the multidimensional space between a new input vector and the vectors belonging to the highest quality classes.

According to a further feature, the output solution is generated by means of:

- minimization of one or more distance metrics,
- and, where multiple solutions are equivalent, by calculating a weighted average or by applying one or more additional discriminatory metrics.

According to a feature, the reinforcement learning algorithm comprises a reward function based on the difference between:

- target values of the navigation parameters,
- and actual values obtained by applying the command signals to the actuators of the operating units.

According to a feature, the reward function is weighted on the parameters of:

- stability of the vessel,
- energy consumption,
- speed of reaching the target condition.

According to a further feature, the training database of the artificial intelligence algorithm is generated by means of domain adaptation, transferring training data from a first type of vessel to a second type by means of transformations performed by artificial intelligence algorithms.

In one embodiment, the system provides for the generation of further synthetic records by means of genetic algorithms and/or data augmentation techniques.

According to a feature of the GAN network, the same comprises:

- a generator configured to produce simulated output vectors for possible navigation maneuvers,
- a discriminator trained with experimental and/or empirical data that determines whether the produced vectors are realistic,
- a cost function for the iterative training of the generator and of the discriminator.

The invention also provides for an embodiment of the navigation control system of a vessel comprising a control unit configured to execute an artificial intelligence algorithm that comprises, in combination:

a) a digital model in which each navigation condition is represented as a point in a multidimensional space, having one dimension for each characteristic parameter of the navigation and/or of the command signals and/or of the actuation signals of the actuators;

b) a distance metric defined in the multidimensional space and a distance minimization algorithm configured to select, for a new input vector, an output vector corresponding to the solution present in the database having the highest quality classification;

c) a GAN architecture comprising a generator configured to produce simulated values of the command signals and a discriminator configured to determine, on the basis of a database of known cases, whether such simulated values are realistic and usable as actual command signals;

d) a validation loop in which the simulated command signals are accepted only if classified as real by the discriminator, while the non-accepted signals are discarded and used for the iterative training of the generator and of the discriminator;

e) optionally, a reinforcement learning algorithm configured to generate candidate actions as a function of the reward based on the difference between the target navigation conditions and the conditions actually achieved, the outputs thereof being subjected to validation through GAN and subsequently optimized by the digital model, and wherein

the control unit provides as output the validated and optimized signals intended for the actuators of the operating units of the navigation.

With reference to the artificial intelligence algorithms, many algorithms falling within this definition and operating on the basis of different modes of learning from data derived from experimental and/or empirical experience are known in the state of the art.

The different types of algorithms are generally developed to perform specific functions or to solve specific problems related to certain technical fields; therefore, their effectiveness in relation to different types of problems is not generally evident. Given the strongly non-linear and non-analytical nature, it is not generally possible to establish a direct relationship between the structural configuration of the algorithm and the quality of the output as a function of the quality and structure of the input data and of the parameters to which said input data refer in order to describe a technical problem in a numerically objective manner.

Various families of AI algorithms may be taken into consideration for application to certain technical fields and to certain technical problems and their effectiveness is not obvious to the person skilled in the art.

One family of algorithms is constituted by the so-called machine learning or deep learning algorithms.

These algorithms are generally based on supervised or unsupervised learning techniques and start from the fact that the algorithm is trained by feeding as input thereto the values of different variables that define a vector or a matrix of input variables. The training is performed by providing to the algorithm the values of the input variables relating to different empirical cases that constitute the records of a training database.

In supervised training, to each record comprising the empirical or experimental values of the input variables of each case are also uniquely associated the values of the output variables of the algorithm, so that in said supervised training phase the algorithm must modify internal parameters of the functions for each record so that for the values of the input parameters of a record, the algorithm provides the values of the output variables uniquely associated with said record, and this for all the records of the training database.

In general, in the case of this type of supervised training, the output values calculated on the basis of the input values of each record are not perfectly identical to those stored for said record, and optimization procedures may be applied such as, for example, so-called back propagation or others.

This type of algorithms is often constituted by so-called neural networks that have a number of input nodes corresponding to the number of input variables and a number of output nodes corresponding to the output variables.

In general, artificial intelligence algorithms and in particular machine learning algorithms are defined by their structure and comprise an input layer with a number of nodes corresponding to the number of input variables, an output layer with a number of nodes corresponding to the output variables, and one or more intermediate layers, each with a predetermined number of nodes, which may also differ from layer to layer, and which have connections among one another, generating a connection network that propagates from layer to layer and that connects the input nodes to the output nodes. Each node has at least one input for an input signal coming from one or more nodes of a preceding layer and at least one output connected to the input of a further node, which output is provided for an output signal calculated as a function of the input signal on the basis of preferably non-linear transfer functions and comprising at least one variable parameter that is defined during the training phase as a function of the values of the input variables and, in the supervised mode, also of the output parameters of the various records of the training database.

A machine learning algorithm constituted by a neural network, for example a convolutional neural network, so-called CNN, or by a combination of cooperating neural networks, said at least one neural network has an input layer with a number of input nodes corresponding to the total number of input variables constituted by the variables that describe at least said one or more characteristic parameters of the initial navigation condition, also called actual navigation conditions, and the values for said variables are determined by the measurement signals of at least one corresponding sensor of said one or more sensors at a predetermined initial time instant and in combination also the target values of said variables that describe said one or more characteristic parameters of the navigation condition at a subsequent time instant, which target values of the variables relating to said characteristic parameters for the navigation condition are set at least in part by the user in the form of target values of at least some of said parameters and/or in the form of target command signals generated by the command signal generating members and/or of the corresponding target actuation signals of the actuators of the corresponding control members whose actuation is provided for the transition of the actual navigation conditions detected at the first time instant to those target conditions defined by said target values and/or which target values of said variables are determined automatically by an automatic navigation control algorithm,
while the output nodes of the algorithm are relating to the variables that describe the command signals generated by the command signal generating members and/or the corresponding actuation signals of the actuators of the control members for executing said transition of the navigation conditions from those detected at the first time instant to the target conditions calculated by the machine learning algorithm, that is by the neural network or by the combination of two or more neural networks.

In one embodiment, it is possible to add to the values of the variables that describe the characteristic parameters of the actual navigation condition also values of one or more variables that describe command signals generated by the command signal generating members and/or the corresponding actuation signals of the actuators of the control members provided at the actual navigation conditions at said first time instant, the input layer of the neural network or of the combination of two or more neural networks being provided with input nodes for each of said further variables relating to command signals generated by the command signal generating members and/or the corresponding actuation signals of the actuators of the provided control members.

In a further optional embodiment, it is also possible to provide an input layer that comprises input nodes also for further variables that describe at least part of or all the command signals generated by the command signal generating members and/or the corresponding actuation signals of the actuators of the control members set by the user manually and/or determined automatically by said navigation control algorithm provided for the transition from the actual navigation condition detected at said first acquisition time instant to said target navigation condition defined by the target values of the variables that describe the characteristic parameters of the state of the target navigation condition.

In this case, the values of the characteristic parameters and/or of the command signals and/or of the actuation signals of the actuators of the control members calculated by the algorithm and provided to the output nodes thereof may constitute corrections of the target values, which corrections include both modifications to the target values of the parameters of the desired target navigation conditions to actually achievable values and/or also modifications to the target command signals and/or to the target actuation signals of the actuators with respect to those envisaged, as well as, when possible according to the configuration of the control system, also modifications to the type of control members actuated for achieving navigation conditions as close as possible to those requested as target.

An example may consist in the fact that while in input, target values of the command signals and/or of the actuators for actuating the control members are provided only for some control members, for example the steering control of the propulsive thrust and/or the power delivered by the propulsion system, the machine learning algorithm generates as output also command signals and/or actuation signals of the corresponding actuators of further control members provided in the vessel control system, such as, for example, command signals and/or actuation signals of the actuators of one or more hull trim control units and/or one or more stabilization units on the basis of the values of the characteristic parameters that describe the actual starting or initial condition at said first time instant and of the values of said target parameters set as input and/or of those actual values calculated by the algorithm itself.

One family of algorithms falling within the general definition of machine learning algorithms is constituted by the so-called deep learning algorithms.

Deep learning algorithms are a subfield of artificial intelligence that mimics the computational functions of the biological neurons of the human brain using so-called artificial neural networks or other types of algorithms such as so-called genetic algorithms that introduce the natural laws of the genetic development of populations.

Deep learning algorithms have been successfully used in various fields of application such as image processing, image pattern recognition, speech enhancement, and other fields, but they usually always have a deterministic predictive purpose aimed at extracting from the data certain qualitative or quantitative information or at classifying the data within certain groups that satisfy predetermined characteristics.

A particular embodiment of a deep learning algorithm usable as an artificial intelligence algorithm is a so-called Deep Generative Model or Algorithm.

According to one embodiment, such Deep Generative Models or Algorithms may be selected from the following list:

CNNs (Convolutional Neural Networks) operating in general in a generative paradigm;
a so-called Generative Adversarial Network (also called GAN) that comprises at least two neural networks operating in a competitive manner,
Variational Autoencoders (called VAE) or combinations of the aforesaid algorithms.

A basic introduction to Deep Generative Models can be found, for example, at https://towardsdatascience.com/deep-generative-models-25ab2821afd3 or http://www.cs.toronto.edu/~slwang/generative_model.pdf.

CNNs are known algorithms and a more detailed description is available at https://en.wikipedia.org/wiki/Convolutional_neural_netwo rk. Convolutional neural networks are an artificial neural network that is applied to analyze visual images such as image and video recognition, image classification, image segmentation, medical image analysis, and others.

VAEs are known algorithms and a more detailed description can be found at https://en.wikipedia.org/wiki/Variational_autoencoder. This algorithm is a kind of artificial neural network having an architecture belonging to the families of probabilistic graphical models and variational Bayesian methods.

The basic architecture of a GAN comprises a first neural network or a combination of two or more neural networks called generator and having the function of generating a set of output data modified with respect to input data and a further neural network or a combination of two or more neural networks having the function of a so-called discriminator and which are trained to analyze the output data of the network or combination of two or more networks constituting the generator in order to try to decide whether these output data of the generator are real data or fake data.

Within the scope of the present invention, the input of the generator comprises a layer of at least one neural network with a number of input nodes corresponding to the total number of input variables constituted by the variables that describe said one or more characteristic parameters of the initial navigation condition, also called actual navigation conditions, and the values for said variables determined by the measurement signals of at least one corresponding sensor of said one or more sensors which values have been measured at a predetermined initial time instant and in combination also the target values of said variables that describe said one or more characteristic parameters of the navigation condition at a subsequent time instant, which target values of the variables relating to said characteristic parameters for the navigation condition are set at least in part by the user in the form of target values of at least some of said parameters and/or in the form of target command signals generated by the command signal generating members and/or of the corresponding target actuation signals of the actuators of the corresponding control members whose actuation is provided for the

transition of the actual navigation conditions detected at the first time instant to those target conditions defined by said target values and/or which target values of said variables are determined automatically by an automatic navigation control algorithm,

while the output nodes of the algorithm are relating to the variables that describe the command signals generated by the command signal generating members and/or the corresponding actuation signals of the actuators of the control members for executing said transition of the navigation conditions from those detected at the first time instant to the target conditions calculated by the machine learning algorithm, that is by the neural network or by the combination of two or more neural networks.

The values present at the output nodes of the generator are subjected to examination by the discriminator and therefore provided to corresponding input nodes of the generator itself which in turn provides as output the decision as to whether or not the output values of the generator are real and therefore usable for performing the control maneuvers of the vessel and/or whether they are so-called fake, that is not useful for the correct navigation control.

Similarly to what has been set forth above, the input and output variables of the generator may be supplemented with variables relating to the command and/or actuation signals respectively actual and relating to the navigation conditions at said first time instant and the variables and/or target values of said command and/or actuation signals, said generator being provided in input with a number of input nodes corresponding to the total number of said variables.

Said deep learning algorithm of the type called GAN therefore provides both the values of the variables to be applied to corresponding navigation control units and the type of these units and/or also the values that describe the actual navigation condition with respect to the target condition, and said command or actuation signals are therefore further validated by the discriminator.

These systems are effective from the standpoint of the reliability of the solutions provided, but suffer from the drawback of requiring a large number of training data and therefore of requiring relatively long times for acquiring these data.

A solution to this problem may consist in the application of data augmentation algorithms which, however, make the configuration of the machine learning algorithm even more complex and lengthy from the computational standpoint.

A family of algorithms that may be used to perform a generation of "synthetic" training records is constituted by so-called genetic algorithms. The so-called genetic algorithms introduce the natural laws of the genetic development of populations to generate, from a number of experimental and/or empirical records available for training, new "synthetic" data records that have a high probability of being compliant with conditions that occur in reality and that therefore may be used to supplement the number of records of a training and/or testing database.

According to one embodiment of application of a genetic algorithm, the new training data records may be generated from a population of existing data records. Said genetic algorithm could be coupled with a combination of neural networks, which could also be GANs, that perform a fitness evaluation of the new training data records generated by the genetic algorithm. An example of such a type of training data set generation algorithm can be found in document CN110298450 or in document WO2006003132.

In this case, the algorithm provides rules for combining the variables and the values thereof present in the records relating to the empirical or experimental cases, rules for determining the fitness of a network trained with the new populations of synthetic records and for labelling the individual synthetic records in the various populations as reliable or not, as well as rules for using the synthetic records of one or more preceding populations to generate further populations of synthetic records which in turn are tested and correspondingly labelled. At the end of an iterative process of generating synthetic records, those considered most effective, that is with the best fitness, are added to the database of records relating to empirical or experimental cases for performing the training or testing of the machine learning algorithm.

In order to determine the fitness of a synthetic record or of a population of synthetic records, it is possible to use a discriminator analogous to that provided in a GAN, in which the generator is constituted by the genetic algorithm.

According to an alternative embodiment, the artificial intelligence algorithm may also be an algorithm that operates according to so-called reinforcement learning. In reinforcement learning, the algorithm effectively learns autonomously, exploring the environment on its own and, among its numerous strengths, it does not require historical data as in the case of algorithms that operate by means of training models of the supervised or unsupervised type such as, for example, those described above.

Unlike models that provide for supervised and unsupervised training processes, the reinforcement learning paradigm is constructed in a manner targeted at solving sequential decision problems, in which the action to be performed depends on the current state of the system and determines the future state thereof.

With reference to the control of the navigation conditions of a vessel previously set forth and analyzed with respect to the solutions that use machine learning algorithms that provide for supervised and unsupervised training, the current state of the system is that defined by the values of one or more variables relating to the characteristic parameters that describe a navigation condition and that are measured at a first time instant by means of one or more sensors and that may optionally also include variables that describe command signals and/or actuation signals of actuators of one or more control members of the navigation condition at said first time instant.

The future state of the system is that relating to the values of one or more variables relating to the characteristic parameters that describe a navigation condition at a future time instant and that may also comprise variables that describe command signals and/or actuation signals of actuators of one or more control members for modifying said navigation condition at said first instant into a target navigation condition at a second future instant with respect to said first instant.

The action to be performed is constituted by the command signals and/or by the actuation signals of the actuators of one or more control members of the navigation condition that the algorithm determines to cause the transition from said initial navigation condition to said future navigation condition.

In one embodiment, the algorithm is provided with the values of the characteristic parameters that describe the initial navigation condition, that is the one measured at said first time instant, and, as the future condition to be reached, the values of the characteristic parameters that describe the navigation condition at said future time instant, while the algorithm provides the values of the parameters relating to the command signals and/or to the actuation signals of one or more actuators of one or more control members of the navigation condition.

The discrimination among the various possible actions, that is the identification of the best action, is based on the evaluation of the quality of an action that is given by a numerical "reward" value, inspired by the concept of reinforcement, and that has the purpose of encouraging correct behaviors of the agent. This type of learning is usually modeled by means of Markov decision processes and may be performed with different types of algorithms, classifiable on the basis of the use of a model that describes the environment, that is in this case the characteristic parameters that describe the navigation condition, the modalities of experience collection, the type of representation of the states of the system and of the actions to be performed, that is of the type and modalities of actuation of one or more navigation control members.

In general, a reinforcement learning algorithm is based on the assumption that within a system, the following may be provided:

a logic mechanism A capable of choosing outputs on the basis of the inputs received;
a logic mechanism B capable of evaluating the effectiveness of the outputs with respect to a specific reference parameter;
a logic mechanism C capable of changing mechanism A to maximize the effectiveness evaluation performed by B.
If mechanism A makes an effective choice, then mechanism B outputs a reward proportional to the effectiveness of the choice of A.
If mechanism A makes an ineffective choice, then mechanism B outputs a penalty proportional to the ineffectiveness of the choice of A.

Mechanism C, by observing the actions of A and B, seeks to modify the mathematical function that governs the behavior of A so as to maximize the quantity and quality of the "rewards".

Mechanisms B and C are those that constitute the reinforcement method specific to this learning methodology.

Further details are described, for example, at the web page:
https://it.wikipedia.org/wiki/Apprendimento_per_rinforzo

As will also be explained in the following description of embodiments, having available the variables that describe the characteristic parameters of the navigation condition with reference to the steering condition of the one or more engines and/or rudders and/or propellers, the forward gear, reverse gear, neutral condition of the one or more engines, the power delivered by the one or more engines, and the operating condition of the trim adjustment devices with reference to the setting of a trim condition relating to the initial or starting navigation condition and the corresponding target values, it is possible to establish, thanks to the sensors for measuring the actual values of the characteristic parameters of the navigation conditions, the effectiveness of the actions defined by the algorithm with respect to the command signals and to the corresponding actuation signals of one or more navigation control members in obtaining the target navigation conditions and therefore to implement the reward mechanism and/or the function modification mechanism by means of said mechanism C.

In one embodiment, the algorithm provides a set of input data that are relating to the values of the variables relating to the characteristic parameters describing an initial navigation condition measured by means of one or more sensors at said first time instant and that therefore determine the state of the navigation control system and the navigation conditions of the vessel.

Among the algorithms that follow reinforcement learning models, the algorithm called Q-learning is one of the approaches used in the state of the art and allows an autonomous agent to learn the optimal action policy through iterative exploration of the environment, without the need for predictive models or historical data. This methodology is based on the acquisition of direct experience, evaluating the consequences of the actions taken and optimizing future decisions on the basis of the results obtained.

With reference to the present invention, the system may comprise one or more of the status condition sensors and generate the command signals and the actuation signals of the actuators of the control members that are listed by way of non-limiting and non-exhaustive example in the following list:

Sensors for measuring the characteristic navigation parameters:

| | |
|---|---|
| **Orientation** | **Route direction along which the vessel is moving;**<br>**Cardinal orientation of the longitudinal axis (bow-stern) of the vessel;**<br>**Variation and variation rate of the orientation of the longitudinal axis; Variation and variation rate of the route direction** |
| **Motion and/or trim and/or stability conditions** | |
| **Motion** | **Navigation speed;**<br>**Pitch oscillation: frequency and amplitude;**<br>**Roll oscillation: frequency and amplitude** |
| **Hull trim of the vessel** | **Longitudinal inclination;**<br>**Lateral inclination;**<br>**Draft of the hull** |

In addition to the above-indicated parameters, one or more parameters listed in the following table may optionally, but not necessarily, be considered:

| **Environmental conditions** | **Characteristic parameters** |
|---|---|
| **Wave motion** | **frequency, amplitude, direction** |
| **Wind** | **Intensity, direction** |
| **Currents** | **Intensity, direction** |
| **Geographical conditions** | |
| **Position** | **Geographic coordinates;**<br>**Distance from fixed obstacles and direction toward them;**<br>**Distance from and direction toward buoys or similar;**<br>**Distance from and direction toward moving points;**<br>**Distance from and direction toward generic target points** |

The combination with at least the environmental parameters relating to wave motion and/or wind and/or currents may be advantageous in order to make the navigation control based on the combination of at least one steering unit, at least one unit for setting the forward or reverse gear direction or neutral and for setting the delivered power, at least one trim adjustment unit and/or stabilization system settings, such as gyroscopic systems or similar, more effective and precise, in that the artificial intelligence algorithm may control said units also taking into account the effects of external forces on the vessel.

A possible optional embodiment may provide, in combination with one or more of the variants described above, also parameters relating to the operating state of the various control units of the vessel such as those listed by way of example but not limitation, nor exhaustively, in the following table:

| | |
|---|---|
| **Operating state of navigation control units** | **Position and/or variation of position of steering unit(s);**<br>**Gear direction/neutral condition and/or variation of gear direction and/or neutral condition of the propulsion system and of the individual engines, i.e. of the propellers and/or jets when the propulsion unit comprises two or more main propulsion engines and/or at least one auxiliary maneuvering engine;**<br>**Set propulsion power and/or variation of propulsion power, i.e. of the rotational speed of the propellers and/or of the jet speed when the propulsion unit comprises two or more main propulsion engines and/or at least one auxiliary maneuvering engine;**<br>**Operating state of trim adjustment units such as trim tabs or the like and/or variation of said operating state;**<br>**Operating state of stabilization units;** |

(continued)

| | |
|---|---|
| | **Set operating state and/or variation thereof of units for regulating the position and/or orientation of the propeller axis and/or of the jet axis with respect to the hull, so-called jack plates comprising at least one degree of translational freedom of said axis with respect to the hull, preferably at least two or three translational degrees along three axes respectively parallel to the longitudinal axis of the vessel, the transverse beam-to-beam axis, and the vertical transverse axis and/or at least one rotational degree of freedom around one of said axes, preferably around two or more of said axes (trim, tilt);**<br>**State of selection of predefined navigation modes (leisure cruise, fast cruise, docking maneuver, drift, dynamic positioning, electronic anchor).** |

According to a further optional feature, it is possible to supplement the characteristic parameters that describe the navigation condition also with parameters that define a desired condition (called target) of the vessel. Such parameters may be one or more of the preceding parameters for which a desired value or a target value is defined. Non-limiting, non-exhaustive examples of these parameters are listed hereinafter and may comprise:

Parameters describing a target geographic point;
Parameters describing a target route;
Parameters describing a target orientation of the vessel during movement along the target route;
Parameters describing a target stabilization condition (maximum roll and/or pitch thresholds);
Parameters describing a target trim of the vessel and/or a target trim of the main and/or auxiliary propulsion unit engines with respect to the hull;
Parameters describing a preselected navigation condition;
Further characteristic parameters of the navigation conditions may also comprise the commands that are generated by command generating members and from which the navigation control unit generates the corresponding actuation commands of the actuators for actuating said one or more control members that are provided to modify the navigation condition with respect to one or more of the aforesaid characteristic navigation parameters.

In order to facilitate the present description, the following notations will be used therein to define the variables relating to the aforesaid parameters.

<u>Navigation condition sensors:</u>

$SCN_i^m$ $SCN_i^m$ : Signal of sensor i in state m, i.e. at time instant m, relating to a parameter $PCN_i^m$ of the various characteristic parameters for describing the navigation condition according to one or more of the embodiments described above.

<u>Status sensors of the command signal generating members:</u>

$SOG_l^m$ $SOG_l^m$ : Signal of sensor l of the command signal generating member of a corresponding member $OG_l^m$ in state m, i.e. at time instant m;

<u>Status sensors of the actuation actuators and/or of the navigation control members:</u>

$SAO_j^m$ $SAO_j^m$ :Signal of sensor j of the actuation actuator and/or of the corresponding control member $AO_j^m$ in state m, i.e. at time instant m;

With respect to the command and actuation signals of the navigation control operating units, these may be summarized for convenience as follows:

Command signals generated by the generating members

$SCOG_l^m$

Command signal generated by generating member 1 at condition m, i.e. at time instant m;

Actuation signals for the actuators for actuating the control members

$SCOA_j^m$

Of actuator j and/or of the corresponding control member at condition m, i.e. at time instant m.

A navigation condition may be described, for example, by means of a vector having the structure shown below:

$$CNAV^m(PCN_{i \in N}^m, SCOG_{l \in N}^m, \; PCNT_{i \in N}^m) = Data\ In$$

Wherein:

| | |
|---|---|
| $PCN_1^m$ | Route direction, magnetic compass |
| $PCN_2^m$ | Longitudinal axis orientation, magnetic compass |
| $PCN_3^m$ | Set steering angle |
| $PCN_4^m$ | Propulsion power (RPM of each engine) |
| $PCN_5^m$ | General gear direction/neutral of the propulsion system |
| $PCN_{6,p}^m$ | Gear direction/neutral of individual main and auxiliary propulsion units p, pEN |
| $PCN_{10}^m$ | Route direction of vessel travel, GPS |
| $PCN_{11}^m$ | Wind speed, direction, and force |
| $PCN_{12}^m$ | Current speed, direction, and force |
| $PCN_{13}^m$ | Wave motion parameters, amplitude, frequency, direction/orientation of the front |
| $PCN_{14}^m$ | Vessel trim parameters, lateral and longitudinal inclination |
| $PCN_{15,q}^m$ | Setting state of hull trim adjustment devices q, trim tab, interceptor, etc., qEN |

The following table lists variables that refer to further characteristic parameters of the navigation condition, one or more of which variables may be provided in combination with those listed in the preceding table.

| | |
|---|---|
| $PCN_7^m$ | GPS position |
| $PCN_8^m$ | GPS speed |
| $PCN_9^m$ | Longitudinal axis orientation, GPS compass |

(continued)

| | |
|---|---|
| $PCN_{16,z}^{m}$ | Setting state of stabilizers z, zEN, fins and/or gyroscopic stabilizer(s) |
| $PCN_{17,p,v}^{m}$ | Setting state of propulsion propeller position trim adjustment devices of the main and auxiliary engines p with respect to the hull (jack plates having a number v of degrees of freedom for positioning the propeller of an engine with respect to the hull). |
| $PCN_{18}^{m}$ | Status signals obtained from onboard camera systems in combination with image processing algorithms |
| $PCN_{19}^{m}$ | Detection and distance signals from obstacles and/or set target positions |
| $PCN_{20}^{m}$ | Signals transmitted from remote stations for detecting navigation conditions |
| $PCN_{21}^{m}$ | State of selection of navigation mode type setting (cruise, maneuver, docking, drift, lateral translation, electronic anchor or dynamic positioning) |

The aforesaid vector may constitute the input or starting data vector *DataIn* of any of the AI algorithms described in the present description and defines a point in a multidimensional system, in which each dimension relates to a specific variable.

For any of the AI algorithms that may be used, the output of the algorithm may consist of a vector having the following form:

$$Data\ out^{m}\left(SCOA_{j\in N}^{m},\ SOA_{j}^{m+1},\ \ PCNT_{i\in N}^{m+1}\ \right)$$

Wherein, for example, the aforesaid variables comprise:

| | |
|---|---|
| $PCNT_{1}^{m+1}$ | **Route direction, magnetic compass** |
| $PCN_{2}^{m+1}$ | **Longitudinal axis orientation, magnetic compass** |
| $SCOA_{3}^{m+1}$ | **Steering angle regulation command** |
| $SOA_{3}^{m+1}$ | **Actual steering angle setting** |
| $SCOA_{4}^{m+1}$ | **Propulsion power regulation command (RPM of each engine)** |
| $SOA_{4}^{m+1}$ | **Actual propulsion power setting (RPM of each engine)** |
| $SCOA_{5}^{m+1}$ | **General gear direction/neutral regulation command of the propulsion system** |
| $SOA_{5}^{m+1}$ | **Actual general gear direction/neutral setting of the propulsion system** |
| $SCOA_{6,p}^{m}$ | **Gear direction/neutral regulation command of individual main and auxiliary propulsion units p, pEN** |
| $SOA_{6,p}^{m}$ | **Actual gear direction/neutral setting of individual main and auxiliary propulsion units p, pEN** |
| $PCNT_{11}^{m+1}$ | **Vessel trim parameters, lateral and longitudinal inclination** |

(continued)

| | |
|---|---|
| $SCOA^{m}_{12,q}$ | **Setting state of hull trim adjustment devices q, trim tab, interceptor, etc., qEN** |
| $SOA^{m+1}_{13,q}$ | **Actual setting state of hull trim adjustment devices q, trim tab, interceptor, etc., qEN** |

The following table lists variables that refer to further characteristic parameters of the navigation condition, one or more of which variables may be provided in combination with those listed in the preceding table.

| | |
|---|---|
| $PCNT^{m+1}_{7}$ | **Actual GPS position following command** |
| $PCNT^{m+1}_{8}$ | **Actual GPS speed following command** |
| $PCNT^{m+1}_{9}$ | **Actual longitudinal axis orientation, GPS compass, following command** |
| $PCNT^{m+1}_{10}$ | **Actual route direction of vessel travel, GPS, following command** |
| $PCNT^{m+1}_{14,z}$ | **Vessel stabilization condition parameters** |
| $SCOA^{m}_{15,z}$ | **Command for stabilizers z, zEN, fins and/or gyroscopic stabilizer(s)** |
| $SOA^{m+1}_{16,z}$ | **Actual state of stabilizers z, zEN, fins and/or gyroscopic stabilizer(s)** |
| $SCOA^{m}_{17,p,v}$ | **Setting command for propulsion propeller position trim adjustment devices of the main and auxiliary engines p with respect to the hull (jack plates having a number v of degrees of freedom for positioning the propeller of an engine with respect to the hull).** |
| $SOA^{m}_{18,p,v}$ | **Actual setting state of propulsion propeller position trim adjustment devices of the main and auxiliary engines p with respect to the hull (jack plates having a number v of degrees of freedom for positioning the propeller of an engine with respect to the hull).** |
| $PCNT^{m+1}_{19,p,v}$ | **Setting state of propulsion propeller position trim adjustment devices of the main and auxiliary engines p with respect to the hull (jack plates having a number v of degrees of freedom for positioning the propeller of an engine with respect to the hull).** |
| $PCNT^{m+1}_{20}$ | **Actual navigation mode state (cruise, maneuver, docking, drift, lateral translation, electronic anchor or dynamic positioning)** |

According to a further feature of the present invention that may be provided in combination with any of the preceding embodiments, in addition to the characteristic parameters that describe a navigation condition, it is also possible to provide for the use of artificial intelligence algorithms for the initial setup of a complex navigation control system.

One embodiment may provide for the use of AI algorithms for setting the correlation functions between the command signals generated by the generating members such as rudders, helms, propulsion control levers, joysticks, selection and/or command buttons, and other members, and the command signals of the actuators that actuate the navigation control members.

For some control members, such as, for example, levers and/or joysticks and/or helms, the displacement thereof must be correlated according to a predetermined function with the variation of state of the corresponding control member. Furthermore, a specific correlation function must also be provided with respect to the speed of variation of state of a control member and of the corresponding variation of the command signal generated with the speed of variation of state of the corresponding actuation actuator of the control member and therefore with the actuation signal generated on the basis of said command signal. In general, in fact, the actuation of a control member by the corresponding actuator is limited with respect to the speed of state variation relative to the corresponding state variation of the control member, so that the correlation function must not only be set to satisfy the maximum and minimum limits of the range of variation of the operating state of a control member relative to the maximum and minimum limits of the range of variation of the operating state of the corresponding command signal generating member, but the correlation function must also be configured to

satisfy at least the maximum and minimum limits of the speed of variation of the operating state of an actuator and/or of the corresponding control member actuated thereby from an initial state to a final or target state relative to the speed of variation between an initial operating state and a final or target operating state of the corresponding command signal generating member.

When a control unit is controlled by a dedicated feedback system, such as, for example, a PID feedback system or other systems, the configuration parameters of the feedback system may also be defined and set or in any case corrected by means of a suitably configured and trained artificial intelligence algorithm.

According to a further feature of the present invention, the navigation control system of a vessel may be trained for the navigation control of a predetermined type of vessels having substantially identical hull characteristics and/or that are equipped with a navigation control system configured in a substantially identical manner, that is with a substantially identical equipment of different types of command generating members, of an identical number and types of actuation actuators of an identical number and types of control members, and also of an identical number and types of navigation condition sensors and/or of the operating state of the command generating members and/or of the actuation actuators and/or of the control members actuated by said actuators.

Within the scope therefore of the identical type of vessel and navigation control system provided thereon, it is possible to generate a database of known cases with a large number of records for training an artificial intelligence algorithm that is constituted by a machine learning algorithm that is trained by means of a supervised or unsupervised training procedure, such as the neural network or networks described above and/or the deep learning algorithms described above.

In fact, the training database for the algorithm executed by the control unit may comprise the records of the databases relating to each of the vessels of the group of vessels that are substantially identical to one another and with substantially identical navigation control systems. The foregoing is applicable both to the algorithms dedicated to determining the actuation signals of the actuation actuators of the corresponding control members and to the algorithms dedicated to determining the setup parameters of the navigation control system.

In one embodiment, the control unit of the vessels may be provided with a communication system with a remote training and/or configuration station for an artificial intelligence algorithm that is intended to be executed by a navigation condition control unit, and said navigation condition control unit is configured to transmit the data records relating to the combinations of input data and output data relating to the execution of navigation condition control actions to said remote unit. This remote unit is in turn configured to use said records relating to actual algorithm execution cases to supplement a training database and/or to improve the training of the artificial intelligence algorithm as a function of the data of the new records received, providing if necessary the upgrades of the algorithms stored and executed by the navigation control units of the individual vessels belonging to the same group of similar vessels and/or with similar navigation control systems.

According to a further feature, the present invention provides that the training databases may also be used for the navigation control of different types of vessels both with respect to the type of hull and/or to the configuration of said hull and with respect to the navigation control system, the training databases being in this case subjected to processing by means of artificial intelligence algorithms, so-called domain adaptation algorithms.

By using domain adaptation algorithms, it is possible to avoid collecting a large number of data relating to different types of vessels and/or control systems by using the training databases constructed for at least one type of vessel with one type of control system and subsequently providing for the fine training of the algorithm on the basis of data collected during the use thereof.

The execution of the domain adaptation step may take place remotely at a station dedicated to the centralized training of the AI algorithms, to the generation, maintenance, and supplementation of the training databases.

A detailed description of domain adaptation algorithms is published at the page https://en.wikipedia.org/wiki/Domain_adaptation and said description is considered to form part of the present description.

According to a still further embodiment, the artificial intelligence algorithm is constituted by a so-called digital model that is based on a database of known cases, for example a database comprising records with input data and the related output data such as those described with reference to the vectors:

$$\boldsymbol{CNAV^{m}(PCN^{m}_{i\in N},\ SCOG^{m}_{l\in N},\ \ PCNT^{m}_{i\in N}\ ) = Data\ In}$$

and

$$\boldsymbol{Data\ out^{m}\left(SCOA^{m}_{j\in N},\ SOA^{m+1}_{j},\ \ PCNT^{m+1}_{i\in N}\ \right)}$$

to which is associated a factor or a combination of factors that indicate the quality thereof from the standpoint of obtaining the desired navigation conditions and/or considered optimal on the basis of current navigation practice.

In this case, the algorithm operates the selection of the combinations of parameters of the output vector and the

related values by applying algorithms for measuring the proximity of an output vector to the solutions of the database of known cases that have been classified as corresponding to the optimal navigation conditions.

In one embodiment, the algorithm therefore provides for the generation of a database comprising records constituted by the vectors representing the input data and the corresponding output data of a navigation condition control system, however, that is in any manner, these output data have been determined as a function of the input data and to which is associated at least one quality factor of the navigation condition obtained using the output data;

the generation of quality classes on the basis of said quality factors;
the classification of the records comprising input data and related output data in relation to the various quality classes from the best to the worst;
the definition of a multidimensional space whose dimensions correspond to the total number of parameters, that is of the components, of the input data vector and/or of the output data vector of the known data records;
the definition of a metric that measures the distance between points of said multidimensional space;
for a new input data vector, the selection of an output data vector from among the output data vectors that, in combination with said input data of the new input data vector, minimize the distance between a point of the multidimensional space whose coordinates correspond to the values of the parameters defined in said new input data vector and in the output data vector calculated by means of said minimization and a point whose coordinates are defined by the values of the parameters of the input data vector and of the output data vector that have a quality classification relating to the best quality class or to at least one predetermined quality class;
the use of the values of the parameters of the output vector calculated by means of said minimization as control values to be applied to the navigation control units, that is to the command members and/or to the actuation actuators and/or to the corresponding navigation control members for modifying the navigation conditions in correspondence with a target navigation condition.

In one embodiment, when the minimization process determines two or more substantially equivalent solutions, that is two or more output data vectors that satisfy the above-indicated quality conditions, it is possible to generate an average among the values of the components (parameters) that constitute the output data vectors or to set further quality discrimination criteria that satisfy further non-essential navigation conditions, but for example related to the comfort of the navigation condition and/or to the speed of reaching a target position or other.

It is also possible to use two or more different metrics and to perform the discrimination among equivalent solutions of the minimization process as a function of the fact that a solution satisfies the minimization of at least two or of all three metrics.

As metrics, it is possible to use a simple metric for measuring the distance between points in a multidimensional space, or it is possible to use clustering algorithms such as the well-known algorithm called k-means, or similar.

In the presence of at least one single engine or of two or more engines in combination with at least one single steering member and at least one trim member, it is possible to provide for different combinations of actuation of the control members as a function of the commands generated by corresponding settings of the command signal generating members, for example of a helm and/or of a lever for setting the direction of travel and/or for regulating the propulsion power and/or of a control member for setting the trim control member of the vessel and/or of the settings of a stabilizer such as a gyroscopic stabilizer and/or combinations or sub-combinations of these control members, each of which combinations determines a predetermined mode of movement of the vessel, herein called navigation mode, such as, for example, a turn, a leisure cruise mode, a fast cruise mode, a lateral translation, a yaw rotation of the hull that modifies the orientation of the longitudinal axis with respect to the route along which the hull is moving, a so-called drift mode, a dynamic position holding mode and/or a mode of travel toward a target point, a rotation around a point coinciding with the plan view outline of the hull, a stabilization or trim condition, then, it is possible that the settings of the individual command signal generating members are generated automatically in combination with one another by means of a single command for setting a navigation mode. In this case, the artificial intelligence algorithm may be trained to automatically generate the combination of actuation signals of the actuators of the control members to be actuated that set said control members each in the operating condition whose combination determines the navigation of the vessel according to the set navigation mode.

In this case, it is for example advantageous to also provide in the input vector a variable that describes the setting state of a navigation mode selector, for example, the variable indicated above as:

| | |
|---|---|
| $PCN_{21}^{m}$ | **State of selection of navigation mode type setting (cruise, maneuver, docking, drift, lateral translation, electronic anchor or dynamic positioning)** |

According to a further feature, it is possible to provide at least one command signal generating member that has at least two or more degrees of freedom with respect to a stationary reference support and sensors for measuring the

characteristic parameters of the path and travel of said movement of said member along one or more of said degrees of freedom, which parameters constitute a combined command signal for generating actuation signals of the one or more actuators of the one or more control members, in particular of the one or more steering units of the one or more engines and/or rudders and/or propellers and/or of the one or more units for setting the forward gear, reverse gear, or neutral condition and for setting the propulsive thrust of the one or more engines and of the one or more trim adjustment and/or trim stabilization units. An example of this type of command signal generating member is, for example, a joystick having at least two translational degrees of freedom and/or one or more rotational degrees of freedom, or a virtual command signal generating member such as that provided by means of a touchscreen or similar.

The invention also relates to a method for controlling the navigation of a vessel by means of a system according to one or more of the preceding embodiments of said system, which method comprises the steps of:

a) collecting data records relating to actual navigation conditions;
b) constructing a training database for an artificial intelligence algorithm by means of real data, synthetic data, and/or domain adaptation;
c) providing the AI model with an input vector relating to the current condition;
d) calculating one or more output vectors by means of:

- distance minimization in a multidimensional space, and/or
- reinforcement learning, and/or
- GAN architecture;

e) applying to the respective actuators the command signals of the selected output vector.

In one embodiment, said method provides for the steps of:

a) acquiring a Data In vector relating to the current condition of the vessel;
b) generating a simulated vector of command signals by means of the GAN generator;
c) validating the signals by means of the discriminator;
d) optimizing the validated vector by means of distance minimization in the digital model;
e) applying the optimized signals to the actuators;
f) updating the GAN, the digital model, and the RL on the basis of the actual results obtained.

These and other features and advantages of the present invention will become more clearly apparent from the following description of some embodiments illustrated in the attached drawings, in which:

Figure 1 shows an example of a vessel provided with a complex navigation condition control system.
Figure 2 shows a high-level diagram of a machine learning algorithm operating according to a supervised or unsupervised training protocol, and in which the structure of the intermediate layers is generically represented by a box while the input and output nodes are specified.
Figure 3 shows in a very generic manner an embodiment of a machine learning algorithm that is trained in a supervised or unsupervised manner by means of a database whose records are constituted by values of the characteristic parameters of the navigation conditions and of the command signals generated by the command signal generating members, of the actuation signals of the actuation actuators of the control members, as well as by the status sensors of said actuation actuators and/or of the corresponding control members actuated thereby.
Figure 4 shows a high-level block diagram of a GAN-type algorithm used by the control unit of the present invention for controlling the navigation conditions.
Figure 5 shows a block diagram of an example that uses as algorithm a digital model in combination with cost function minimization metrics.
Figure 6 shows a table of an example of possible modes of movement of a vessel provided with two stern outboard engines and in which the command is generated by a joystick and/or by a steering helm and/or by the levers for setting the gear direction/neutral and for setting the delivered power.
Figure 7 shows a flow diagram of a control system of a vessel that provides in combination a Reinforcement Learning algorithm, a GAN (Generator + Discriminator), and a multidimensional Digital Model for the generation of control signals of the actuators of a control system of the type provided according to one or more of the embodiments of the present invention on the basis of a Data In vector with a structure according to one or more of the variants provided in the present invention.

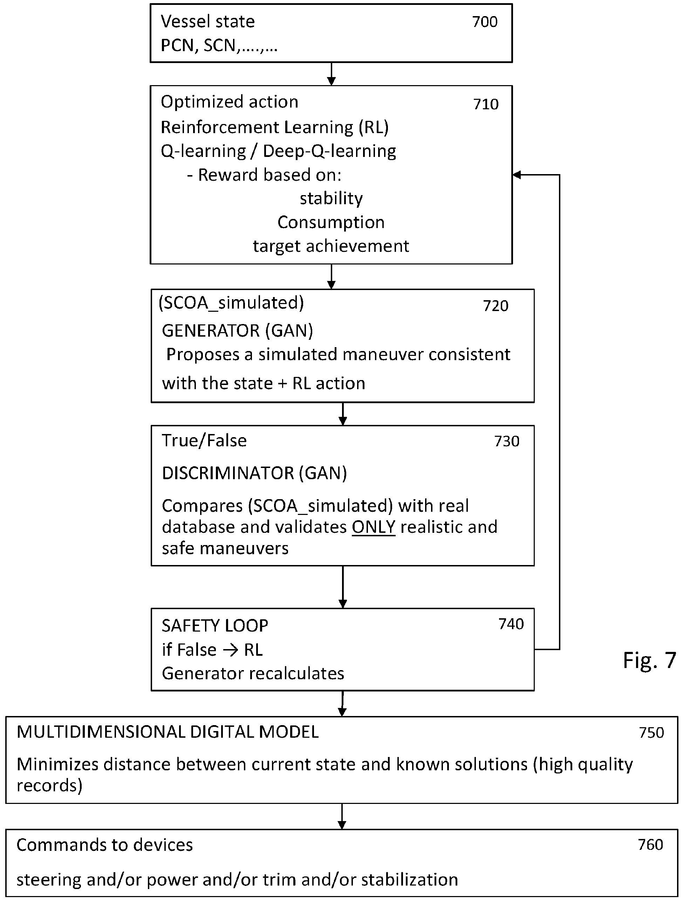

The figure shows a high-level block diagram of a control system of a vessel that allows the steps of the flow

diagram according to Figure 7 to be implemented, comprising in combination a Reinforced Learning algorithm, a GAN, a multidimensional digital model, and a Safety Loop for determining the command signals of the actuators of one or more navigation control members of a vessel according to one or more of the above-described combinations of the different control members of the navigation conditions.

With reference to the figures and in general to the text of the present invention, the lists that enumerate the possible operating units, that is the possible sensors, the possible command signal generating members, and the possible actuators as well as control members actuated thereby, are not to be considered exhaustive, but said operating units may be supplemented, it being understood that the generic terms contain all the currently known possible variants of said operating units.

Nor are the lists relating to the status parameters that define the navigation conditions and/or the operating conditions of the operating units to be considered exhaustive, and these too may be supplemented by further variants not provided for in detail.

The principle on which the present invention is based is that of making possible a simplification of the governance of a vessel in a complex system for controlling the navigation conditions of a vessel in order to always be able to obtain the best navigation conditions compatible with the target requirements and with the conditions of the vessel as well as with the environmental conditions.

As already expressed above, various control members of specific navigation conditions of a vessel that operate independently of one another and that are currently controlled by separate command signal generating members of the respective command signals, which members are actuated independently of one another, are known in the state of the art.

However, human experience in the governance of vessels teaches that the dynamic behavior of the vessel and the influence thereon of the various control members of said dynamic behavior are interconnected given the particularities of the environment in which the vessel moves, that is of the water and of the wind.

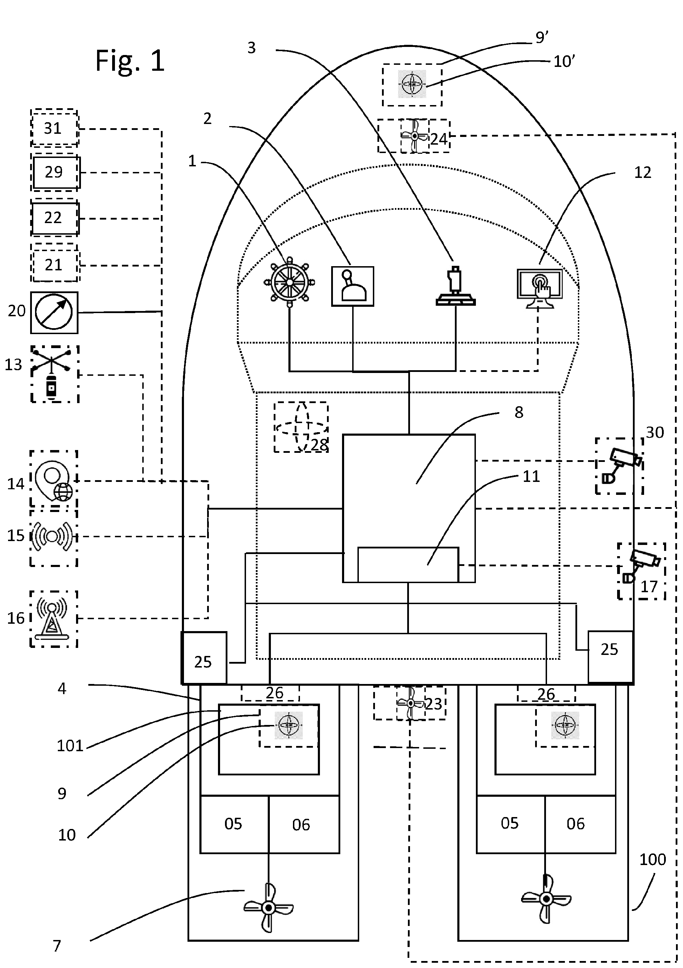

Figure 1 therefore shows, in a non-limiting and non-exhaustive manner, an example of a vessel to which a control system according to the present invention is applied.

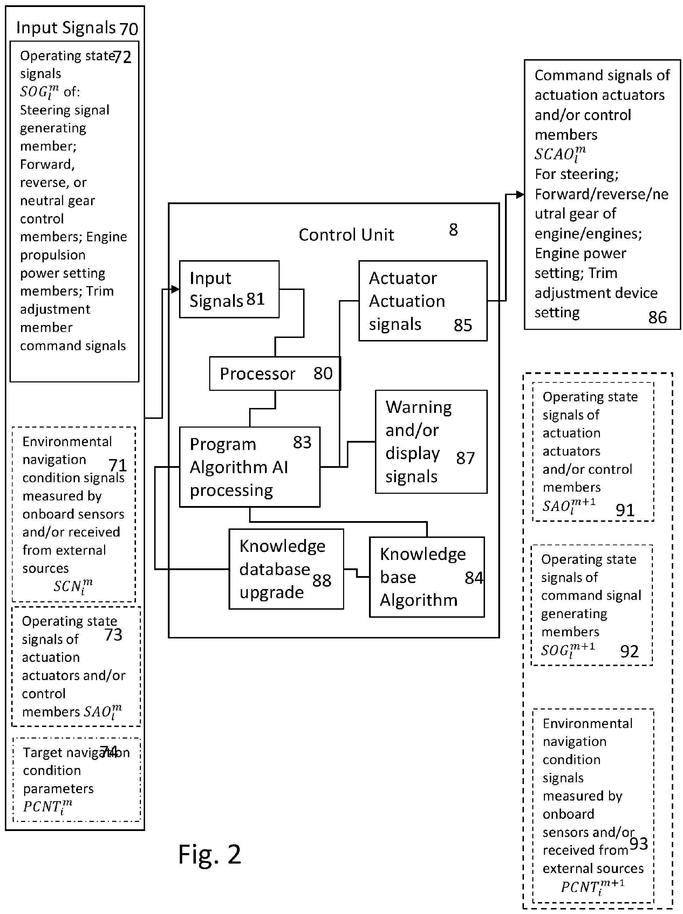

Figure 2 shows a high-level diagram of a machine learning algorithm operating according to a supervised or unsupervised training protocol.

With reference to Figure 1, an example of a navigation condition control system for vessels, watercraft, or similar, which is the subject of the present invention, comprises, in its most reduced configuration, at least one direction control system, that is a steering system, a speed variation control system of at least one propulsion unit 100 and at least one trim adjustment and/or stabilization unit 26, as well as a central processing unit for managing the command signals 8.

In the figure, the above-indicated navigation condition control units are shown with solid lines, while further control units and also one or more sensors for measuring characteristic parameters of the navigation condition that may optionally be provided either individually or in any combination or sub-combination of two or more of said sensors are indicated with dashed lines, as are the connections to the input and output interfaces of the control unit 8.

In particular, the steering control system comprises at least one steering command signal generating member 1, such as, for example, a helm, while the speed variation control system of the vessel, that is of the power delivered by the propulsion system, comprises at least one speed variation and/or gear direction control member designated as 2, such as, for example, a lever, or similar traditionally used for such type of command. The functions of said command signal generating members 1 and 2 may be combined, in whole or in part, in other control members such as, for example, a joystick 3 and/or an advanced interface such as, for example, a device with a graphical interface and touch screen 12.

In the case of devices with a graphical interface, such as, for example, the touch screen 12 but also other embodiments such as software programs running on handheld devices, a graphical processing unit 11 cooperating with the control system is provided in order to provide the operator with visual and/or acoustic indications and/or verbal warnings on the real-time position of the vessel while navigating, stationing, and also during docking operations.

The trim adjustment and/or stabilization members are indicated by reference numeral 25 and are constituted, for example, by at least one so-called trim tab provided at the stern of the vessel and arranged symmetrically at the two lateral ends of the transom or of the related hull portion with respect to the central longitudinal axis of the hull. For generating actuation commands of said trim adjustment and/or stabilization members, dedicated members may be provided, such as, for example, buttons or levers not illustrated in detail, or the command signals may be integrated as components of the command signal generated by a common generating member of said combined command signal such as the joystick described above. In this way, the steering action and/or the action of setting the direction of travel or neutral and/or the action of regulating the propulsion power of one or more engines and/or of one or more rudders and/or of one or more propellers is combined with a trim adjustment or stabilization action of the hull.

In a preferred embodiment, the actuation command signals of the actuators of the steering control members and/or of the members for setting the direction of travel or neutral and/or of the members for regulating the propulsion power of one or more engines and/or of one or more rudders and/or of one or more propellers and/or of the trim adjustment or stabilization members of the hull are generated by the control unit by means of the artificial intelligence algorithm in a synchronized manner so as to obtain an optimized movement of the vessel from the standpoint of the stability thereof and

of the safety of the maneuver set or requested by the pilot.

It is possible that the control unit automatically generates an actuation signal of the trim adjustment and/or stabilization members, which signal provides for setting a trim adjustment and/or stabilization action that compensates for modifications of the trim condition due to the set steering of the vessel and/or to the set navigation mode and that also takes into account the corresponding setting of the direction of travel in forward or reverse or neutral and of the power delivered by said one or more engines, thereby balancing negative effects of the variations of the navigation condition of the individual characteristic parameters modified by said control members.

With reference to one embodiment, the steering command signal generating member 1 provides said signals to a control unit 8 which in turn generates as output actuation signals 4 for one or more steering actuators intended to set the orientation of one or more engines 5 and/or of one or more rudders 6 about an axis perpendicular to the longitudinal axis of the vessel and substantially vertical, that is having a predominant directional component in the vertical direction, with reference to a static condition of the vessel with respect to the roll and/or pitch condition. The steering is actuated by means of one or more steering actuators 101 which may be of any type according to the variants available in the state of the art.

The speed variation command signal generating member 2 activates said control unit 8 for the generation of actuation signals of actuators that act on the speed variation control members of the engines, such as, for example, members configured to set at least the RPM of one or more propellers 7 whose mechanical motion is originated by a corresponding engine or by multiple engines 5.

The control members 1 and 2, possibly in combination with or as an alternative to members 3 and 12, thus allow operations for modifying the navigation conditions to be performed in that through the steering of the one or more engines 5 or of one or more rudders 6, the direction of travel of the vessel is set, while through the setting of the RPM of the propulsion propellers, the thrust of the vessel is established and/or the direction, that is whether to make the vessel proceed forward or backward and at what speed and/or a neutral condition.

Although the illustrated embodiment shows only two main propulsion engines 5 and two auxiliary maneuvering propulsion engines, respectively one stern-thruster 23 and one bow-thruster 24, the vessel may be provided with a main propulsion system comprising a single engine or comprising more than two engines 5.

When multiple engines 5 are comprised, it is possible and advantageous to provide that each of said engines is steerable also independently of the other engines and both in a synchronized manner, that is so as to be rotated by the same angle and in the same direction as the other engines, or that each engine may be in a direction and with a steering angle different from one or more or all of the further engines.

The foregoing also applies with regard to the direction of travel set for each of the engines 5 and/or the neutral condition, and also with regard to the delivered power set for each engine, that is the rotational speed of the corresponding propeller.

The steering angle and/or the travel condition selected from among forward gear, reverse gear, and neutral for each of said engines may be controlled by means of a single steering or directional command generating member as provided above in combination with a command for selecting different modes of movement of the vessel for which it is provided both to steer the engines by a different angle for at least one or more or all of the engines provided and/or to set at least one or more or all of said engines in different travel conditions from one another and/or with different propulsion powers, that is different RPMs of the corresponding propellers.

This is in this case a combined command that is pre-programmed and stored in the control unit, so that when a movement mode selection is set and at least one command generating member is actuated in one way, the engines are set with the different steering and/or propulsion conditions provided for the movement of the vessel according to the selected mode.

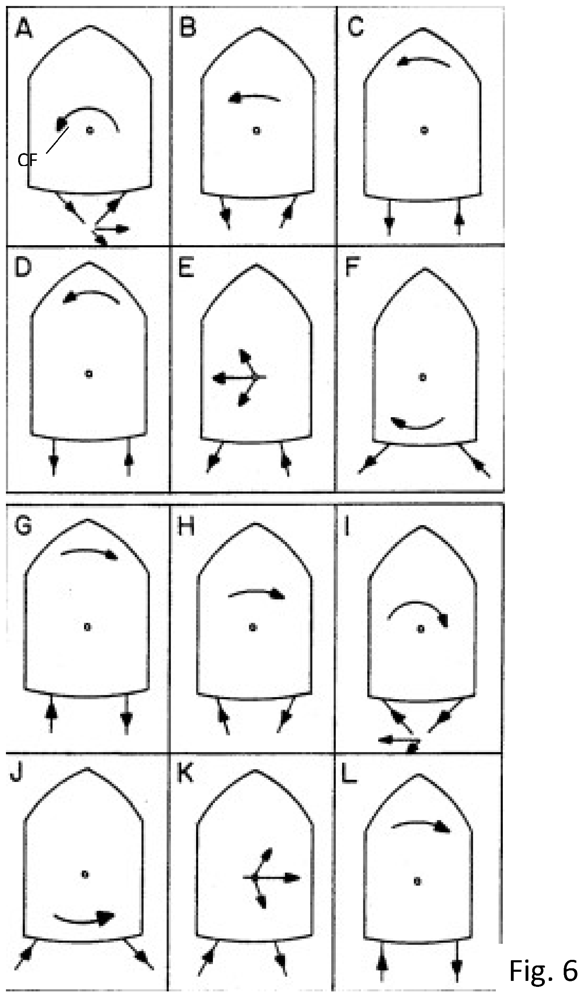

The table of Figure 6 shows an example of the modes of movement of a vessel provided with two stern outboard engines and in which the command is generated by a joystick and/or by a steering helm and/or by the levers for setting the gear direction/neutral and for setting the delivered power.

The foregoing may also apply with regard to the auxiliary maneuvering propulsion units which may be constituted by those shown in dashed lines in Figure 1, for which it is not possible to perform steering controls, or they may be constituted by steerable bow or stern auxiliary propulsion units such as those shown, for example, in document JP4791340B2.

In Figure 1, reference numeral 25 schematically indicates hull trim adjustment devices that are known by the name of trim tabs and that are described, for example, in document US5,881,666.

Reference numeral 26 indicates optional control members that are shown schematically and are so-called jack plates that allow the engines to be translated along at least one direction, preferably two or three mutually perpendicular directions, and/or to rotate around one or more axes. These plates called jack plates are known and are described, for example, in documents EP3789287A1 and EP3241735.

Also in Figure 1, reference numeral 28 indicates a further unit that may optionally be provided as a stabilization system, in particular a system that may be both active and passive and that may be constituted by one or more lateral stabilization fins that are movable according to predetermined one or more degrees of freedom and/or a gyroscopic

stabilization system such as that described, for example, in document EP3985273A1.

As shown in Figure 1, the navigation condition control system according to this embodiment may optionally also comprise a plurality of sensors that are dedicated to measuring characteristic parameters of the navigation condition and/or of the operating state of the command signal generating members and/or of the actuation actuators of the control members.

According to this embodiment, there is provided, for example, a dynamic detection system of the operating state of the navigation control units which is in the form of position and/or movement sensors of the actuation actuators and/or of the control members actuated thereby.

Said system may for example comprise one or a set of inertial platforms such as those indicated by 9, 10 and 9', 10' in the figure and which are positioned integrally with the moving members of the actuation actuators of the control members described in more detail above, that is steering members, gear direction or neutral setting members, propulsion power setting members, trim adjustment members, engine positioning members such as jack plates or similar, and other members.

For example, said status sensors exemplified by an inertial platform may be applied to the steering actuator 101 in order to detect the change of position thereof and to assist the operation of a control algorithm executed by the control unit 8. The use of the inertial platforms 10 and/or of a dynamic roto-translation detection system 9 must not however be seen in exclusive combination with the steering actuators but their positioning is also possible in other positions of the vessel such as, by way of example and for graphical convenience, in the bow of the vessel itself, possibly integral with the hull.

As anticipated, the control of the navigation conditions of the vessel which is the subject of the invention is performed by the control unit 8 which, on the basis of the control algorithm, processes and provides to the actuators actuation command signals of the control members.

In the example shown, the control unit 8 supervises and manages the transformation of the commands of an operator into actuation commands of the actuators of one or more of the control members and to do so is provided with a logic interface toward all the above-mentioned control members or operating units and also to one or more sensors of values of one or more characteristic parameters of the navigation condition, among which, by way of non-limiting and non-exhaustive example, there may be provided anemometers 13 that detect wind direction and speed, systems for determining the position of the vessel, for example by means of global positioning sensors such as GPS and/or GLONASS 14, position, proximity, magnetic sensors 15 and similar, transceiver systems 16 for receiving information from external remote sources outside the vessel and/or closed-circuit video surveillance systems 17, 30 combined with a secondary processing unit which could be used for advanced real-time detection of the context in which the vessel is navigating, such as, for example, detection of the characteristics of the wave motion, detection of the roll and/or pitch movement of the vessel, detection of the distance of the vessel from fixed obstacles or objects such as buoys, docks, and similar. The image processing algorithms used may be, for example, motion detection algorithms, pattern recognition, thermal and/or infrared vision.

Further sensors may be constituted by a magnetic compass 20 and/or a GPS compass 21 and/or a gyroscopic compass 22 and/or a pitch, roll sensor 29 and/or a sensor 31 of the current parameters such as direction and/or speed.

In a refinement, the video sensors may be mounted on a drone associated with the vessel and acting as an auxiliary member, as described, for example, in document US11472521B2.

As stated, the navigation control unit comprises a central processing unit for processing the command signals generated by the various generating members and is also responsible for executing a navigation control algorithm.

With reference to the present invention, the navigation condition control unit executes an algorithm for determining the actuation signals of the actuation actuators of one or more control members provided in the various control units and also for selecting said actuation actuators and therefore the related control members to be activated on the basis of the command signals generated by the command signal generating members such as the members defined by numerals 1, 2, 3, 12 and of one or more measurement signals of the sensors of the example of Figure 1.

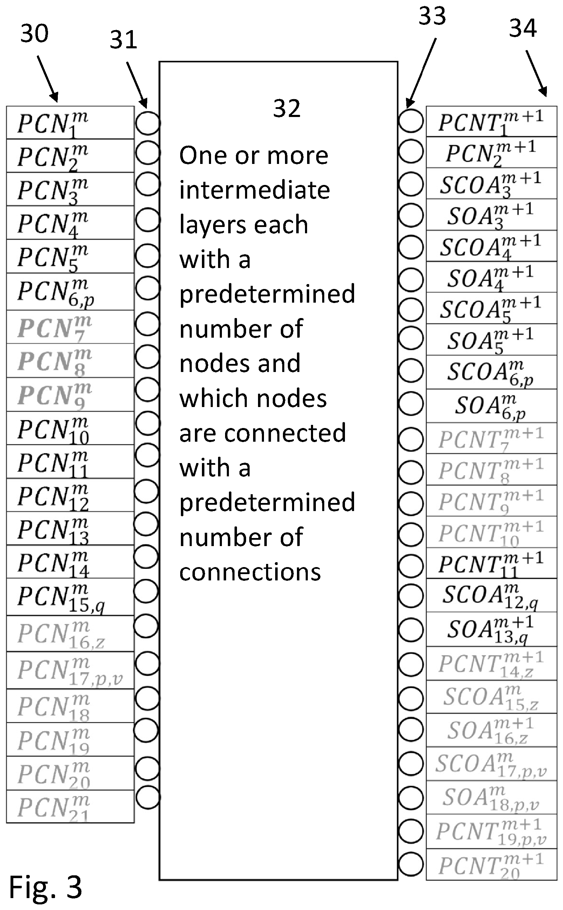

Figure 3 shows a block diagram of an example of a control unit in combination with the input and output signals according to the preferred configuration of the present invention comprising:

- at least one steering unit of one or more engines 5 and/or of one or more rudders 6 and/or of one or more propellers 7 and comprising at least one control member 1 and/or 3 and/or 12;
- at least one unit for setting the forward or reverse gear direction or neutral and the power delivered by one or more engines and comprising at least one control member 2, 3, 12;
- at least one unit for setting the trim adjustment and/or stabilization of the vessel and comprising at least one control member 3, 12.

Advantageously, as already described above, the configuration of the system is advantageously supplemented by at least one combination of sensors for measuring the values of the characteristic parameters of the navigation condition that are provided to the algorithm and that may advantageously improve the effectiveness of the navigation

control system with respect to the desired target conditions. A possible configuration of an input vector is shown in Figure 3.

The control unit 8 comprises a communication interface 81 with entities generating input signals 70. The input signals 70 are processed by a processor 80 that executes a navigation condition control program stored in a memory 83 and which program encodes in machine language, that is executable by the processor, the instructions that configure the processor in such a way that it performs the processing steps of an artificial intelligence processing algorithm that will be described in greater detail hereinafter.

The artificial intelligence algorithm is based on a so-called knowledge base stored in memory 84 and which comprises data relating to the characteristic parameters of the navigation conditions and/or of the operating units of the control system collected in previous cases by experimental and/or empirical acquisition and/or synthetic data constructed on the basis of said experimental and/or empirical data by means of data augmentation algorithms.

The algorithm provides as output the actuation signals of the actuation actuators of one or more control members as shown by interface 85 and box 86 and optionally at interface 87 also the signals of the operating state of the actuation actuators and/or of the related control members and/or the signals of the operating state of the command signal generating members of the actuation actuators and/or of the control members and/or the signals of the environmental navigation conditions measured by the onboard sensors and/or received from external sources as shown by boxes 88, 89, 91.

Box 70 lists possible input signals provided to interface 81.

Reference numeral 71 indicates the signals relating to the environmental navigation conditions measured by the onboard sensors and/or received from external sources and whose box is drawn with dashed lines to indicate that such signals are optional with respect to the minimum configuration of the system. Reference numeral 72 indicates the signals of the operating state of the command signal generating members provided in the above-defined minimum configuration.

Optionally and as indicated by 73, it is also possible to provide to the input interface also operating state signals of actuation actuators and/or control members and/or, as indicated by 74, optionally also the values of one or more characteristic parameters of the target navigation conditions, which are detectable by means of one or more of the sensors of the navigation condition control system, for example one or more of the sensors provided in the example of Figure 1.

In Figure 2, the various signals are defined by the following notations

<u>Navigation condition sensor signals:</u>

$SCN_i^m \, SCN_i^m$ :Signal of sensor i in state m, i.e. at time instant m, relating to a parameter $PCN_i^m$ of the various characteristic parameters for describing the navigation condition.

<u>Signals of one or more status sensors of the command signal generating members:</u>

$SOG_l^m \, SOG_l^m$ : Signal of sensor 1 of the command signal generating member of a corresponding member $OG_l^m$ in state m, i.e. at time instant m;

<u>Signals of one or more status sensors of the actuation actuators and/or of the navigation control members:</u>

$SAO_j^m \, SAO_j^m$ :Signal of sensor j of the actuation actuator and/or of the corresponding control member $AO_j^m$ in state m, i.e. at time instant m;

<u>Command signals generated by the generating members</u>

$SCOG_l^m$

Command signal generated by generating member 1 at condition m, i.e. at time instant m;

<u>Actuation signals for the actuators for actuating the control members</u>

$SCOA_j^m$

Of actuator j and/or of the corresponding control member at condition m, i.e. at time instant m.

Therefore, with reference to the signals defined in fields 91, 92, 93, these refer to a time instant or to a state of the system m+1, that is subsequent to the state or to the instant m and generated by the application at instant m of the actuation actuator and/or control member command signals $SCAO_l^m$ of box 86 of the example of Figure 2.

Also with regard to the outputs, those indicated in box 86 are those relating to the above-defined minimum configuration, while those of boxes 91 to 93 shown with dashed lines are optional output signals.

As already described in the preceding description, it is possible to use different types of artificial intelligence algorithms.

Figure 3 shows in a very generic manner an embodiment of a machine learning algorithm that is trained in a supervised or unsupervised manner by means of a database whose records are constituted by values of the characteristic parameters of the navigation conditions and of the command signals generated by the command signal generating members, of the actuation signals of the actuation actuators of the control members, as well as by the status sensors of said actuation actuators and/or of the corresponding control members actuated thereby.

With reference to Figure 3, the following table lists the variables and the corresponding meanings relating to the input data to a machine learning algorithm with supervised or unsupervised training such as a neural network or a combination of neural networks.

Column 30 relates to the description of an input vector. Each of the parameters is provided to a corresponding input node 31 of a neural network whose intermediate node layers are not specified in detail and are generically summarized by box 32.

The network comprises output nodes indicated by 33 and to which are associated the related output variables shown in column 34.

The example of Figure 3 shows an embodiment in which the input and output parameters relating to the minimum configuration of the system are indicated in black, to which one or more sensors of the values of some characteristic parameters for describing the navigation condition have been further added. The variables indicated in gray indicate that the same relate to input and output signals that may be optionally provided either individually or in any combination or sub-combination and relating to a configuration of the system that is progressively more complex from the standpoint of the hardware and of the algorithm executed by the control unit 8.

An input data vector according to the example of Figure 3 may be defined as follows:

$$Data\ In^m(PCN_1^m, .., PCN_N^m, SCOG_1^m, .., SCOG_R^m, .., PCNT_1^m\ , .. PCNT_T^m)$$

Wherein, for example, the individual variables may have the following physical and numerical meanings

| | |
|---|---|
| $PCN_1^m$ | **Route direction, magnetic compass** |
| $PCN_2^m$ | **Longitudinal axis orientation, magnetic compass** |
| $PCN_3^m$ | **Set steering angle** |
| $PCN_4^m$ | **Propulsion power (RPM of each engine)** |
| $PCN_5^m$ | **General gear direction/neutral of the propulsion system** |
| $PCN_{6,p}^m$ | **Gear direction/neutral of individual main and auxiliary propulsion units p, pEN** |
| $PCN_{10}^m$ | **Route direction of vessel travel, GPS** |
| $PCN_{11}^m$ | **Wind speed, direction, and force** |
| $PCN_{12}^m$ | **Current speed, direction, and force** |
| $PCN_{13}^m$ | **Wave motion parameters, amplitude, frequency, direction/orientation of the front** |
| $PCN_{14}^m$ | **Vessel trim parameters, lateral and longitudinal inclination** |
| $PCN_{15,q}^m$ | **Setting state of hull trim adjustment devices q, trim tab, interceptor, etc., qEN** |

The variables relating to the parameters that may optionally be provided either individually or in any combination or sub-combination of two or more parameters may be, for example:

| | |
|---|---|
| $PCN_7^m$ | **GPS position** |
| $PCN_8^m$ | **GPS speed** |
| $PCN_9^m$ | **Longitudinal axis orientation, GPS compass** |
| $PCN_{16,z}^m$ | **Setting state of stabilizers z, zEN, fins and/or gyroscopic stabilizer(s)** |
| $PCN_{17,p,v}^m$ | **Setting state of propulsion propeller position trim adjustment devices of the main and auxiliary engines p with respect to the hull (jack plates having a number v of degrees of freedom for positioning the propeller of an engine with respect to the hull).** |
| $PCN_{18}^m$ | **Status signals obtained from onboard camera systems in combination with image processing algorithms** |
| $PCN_{19}^m$ | **Detection and distance signals from obstacles and/or set target positions** |
| $PCN_{20}^m$ | **Signals transmitted from remote stations for detecting navigation conditions** |
| $PCN_{21}^m$ | **State of selection of navigation mode type setting (cruise, maneuver, docking, drift, lateral translation, electronic anchor or dynamic positioning)** |

The output data may also be represented in vector form as:

$$Data\ out^m\left(SCOA_{j\in N}^m,\ SOA_j^{m+1},\ \ PCNT_{i\in N}^{m+1}\right)$$

Similarly to what has been described for the input vector, the example indicates a possible combination of output data:

| | |
|---|---|
| $PCNT_1^{m+1}$ | Route direction, magnetic compass |
| $PCN_2^{m+1}$ | Longitudinal axis orientation, magnetic compass |
| $SCOA_3^{m+1}$ | Steering angle regulation command |
| $SOA_3^{m+1}$ | Actual steering angle setting |
| $SCOA_4^{m+1}$ | Propulsion power regulation command (RPM of each engine) |
| $SOA_4^{m+1}$ | Actual propulsion power setting (RPM of each engine) |
| $SCOA_5^{m+1}$ | General gear direction/neutral regulation command of the propulsion system |
| $SOA_5^{m+1}$ | Actual general gear direction/neutral setting of the propulsion system |
| $SCOA_{6,p}^m$ | Gear direction/neutral regulation command of individual main and auxiliary propulsion units p, pEN |
| $SOA_{6,p}^m$ | Actual gear direction/neutral setting of individual main and auxiliary propulsion units p, pEN |
| $PCNT_{11}^{m+1}$ | Vessel trim parameters, lateral and longitudinal inclination |
| $SCOA_{12,q}^m$ | Setting state of hull trim adjustment devices q, trim tab, interceptor, etc., qEN |
| $SOA_{13,q}^{m+1}$ | Actual setting state of hull trim adjustment devices q, trim tab, interceptor, etc., qEN |

To these, the following parameters, which correspond to those indicated in gray in Figure 3, may be added individually or in any combination or sub-combination:

| | |
|---|---|
| $PCNT_{7}^{m+1}$ | Actual GPS position following command |
| $PCNT_{8}^{m+1}$ | Actual GPS speed following command |
| $PCNT_{9}^{m+1}$ | Actual longitudinal axis orientation, GPS compass, following command |
| $PCNT_{10}^{m+1}$ | Actual route direction of vessel travel, GPS, following command |
| $PCNT_{14,z}^{m+1}$ | Vessel stabilization condition parameters |
| $SCOA_{15,z}^{m}$ | Command for stabilizers z, zEN, fins and/or gyroscopic stabilizer(s) |
| $SOA_{16,z}^{m+1}$ | Actual state of stabilizers z, zEN, fins and/or gyroscopic stabilizer(s) |
| $SCOA_{17,p,v}^{m}$ | Setting command for propulsion propeller position trim adjustment devices of the main and auxiliary engines p with respect to the hull (jack plates having a number v of degrees of freedom for positioning the propeller of an engine with respect to the hull). |
| $SOA_{18,p,v}^{m}$ | Actual setting state of propulsion propeller position trim adjustment devices of the main and auxiliary engines p with respect to the hull (jack plates having a number v of degrees of freedom for positioning the propeller of an engine with respect to the hull). |
| $PCNT_{19,p,v}^{m+1}$ | Setting state of propulsion propeller position trim adjustment devices of the main and auxiliary engines p with respect to the hull (jack plates having a number v of degrees of freedom for positioning the propeller of an engine with respect to the hull). |
| $PCNT_{20}^{m+1}$ | Actual navigation mode state (cruise, maneuver, docking, drift, lateral translation, electronic anchor or dynamic positioning) |

It is important to emphasize again that both the output vector and the input vector may comprise only a part of the indicated parameters. The essential parameters for configuring the simplest possible embodiment, that is the least complex from the standpoint of the hardware configuration of the navigation control system, may be limited to the following combination of input data:

| | |
|---|---|
| $PCN_{1}^{m}$ | Route direction, magnetic compass |
| $PCN_{3}^{m}$ | Set steering angle |
| $PCN_{4}^{m}$ | Propulsion power (RPM of each engine) |
| $PCN_{5}^{m}$ | General gear direction/neutral of the propulsion system |
| $PCN_{6,p}^{m}$ | Gear direction/neutral of individual main and auxiliary propulsion units p, pEN |
| $PCN_{16,z}^{m}$ | Setting state of stabilizers z, zEN, fins and/or gyroscopic stabilizer(s) |

The output signals may also be limited to a combination of essential signals for a reduced configuration of the navigation control system as shown hereinafter:

| | |
|---|---|
| $PCNT_{1}^{m+1}$ | Route direction, magnetic compass |
| $SCOA_{3}^{m+1}$ | Steering angle regulation command |

(continued)

| | |
|---|---|
| $SOA_3^{m+1}$ | Actual steering angle setting |
| $SOA_4^{m+1}$ | Actual propulsion power setting (RPM of each engine) |
| $SCOA_5^{m+1}$ | General gear direction/neutral regulation command of the propulsion system |
| $SOA_5^{m+1}$ | Actual general gear direction/neutral setting of the propulsion system |
| $SCOA_{6,p}^{m}$ | Gear direction/neutral regulation command of individual main and auxiliary propulsion units p, pEN |
| $SOA_{6,p}^{m}$ | Actual gear direction/neutral setting of individual main and auxiliary propulsion units p, pEN |
| $PCNT_9^{m+1}$ | Actual longitudinal axis orientation, GPS compass, following command |
| $PCNT_{14,z}^{m+1}$ | Vessel stabilization condition parameters |
| $SCOA_{15,z}^{m}$ | Command for stabilizers z, zEN, fins and/or gyroscopic stabilizer(s) |
| $SOA_{16,z}^{m+1}$ | Actual state of stabilizers z, zEN, fins and/or gyroscopic stabilizer(s) |
| $PCNT_{20}^{m+1}$ | Actual navigation mode state (cruise, maneuver, docking, drift, lateral translation, electronic anchor or dynamic positioning) |

The training database of these types of algorithms must comprise records in which there are stored for each case one or more of the input data and output data, that is the characteristic parameters provided for the configuration of the navigation condition control system and whose values have been determined in experiments and/or empirically, that is by performing navigation control maneuvers with known techniques and therefore with known navigation control algorithms.

Typically, each record contains the variables relating to all or some of the parameters of the Data In and Data Out vectors as defined above.

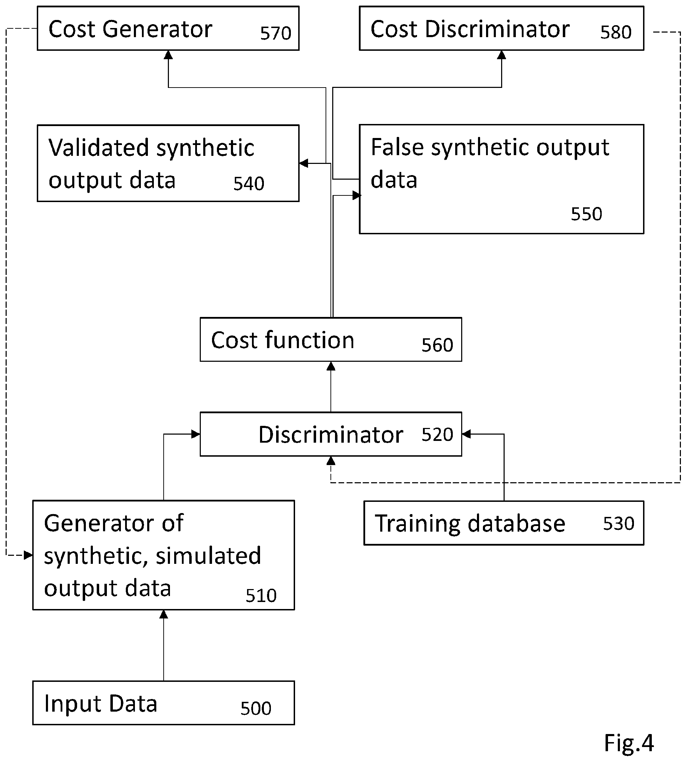

As an alternative to machine learning algorithms of the type described above, it is possible to use so-called deep learning algorithms. An example of machine learning algorithms is constituted by so-called GANs. The diagram of Figure 4 shows a high-level diagram of a so-called GAN (Generative Adversarial Network).

Figure 4 shows a high-level diagram of a generic GAN algorithm. Said algorithm combines two neural networks or groups of neural networks operating in competition with each other. Reference numeral 510 indicates a first neural network having the function of a generator and having the function of generating simulated output data as if they were real and fieldmeasured output data from the input of input data 500. Said synthetic output data are sent to a discriminator 520, which is constituted by the further neural network or by a further group of neural networks and which is trained to determine whether the synthetic output data can be considered real or fake. This means that the simulated output data may be maintained as real output data and therefore provided to the system for actuating the actuation actuators of one or more control members.

The discriminator 520 is trained to perform the aforesaid discrimination thanks to a training database comprising the combinations of input data and output data of the experimental and/or empirical cases and which is indicated by 530.

The output data considered real by the discriminator will be the simulated output 540 to be used for controlling the system. The output data classified as fake by the discriminator will be discarded and not considered.

Determining whether the output data are real or fake is the task of the discriminator and cost functions are provided for calculating the quality of the output as indicated by 560. The cost functions are used to reward or punish, respectively, the generator 510 and the discriminator 520 in the case in which synthetic output data from the generator 510 are labeled as real by the discriminator 520 or if the discriminator has recognized that the output data from the generator 510 are not considered as real output data but synthetic, that is simulated, data.

This is represented by the generator cost and discriminator cost functions that are indicated by 570 and 580. The result of the cost that causes reward or punishment may be reported respectively to the generator 510 and to the discriminator 520 for further training of both, that is to make the generator and the discriminator learn from their own successes and from their own errors.

Such back-propagation training by means of the costs calculated with the cost functions 560 may or may not be

provided and this is indicated by the dashed arrow that connects the cost function to the respective generator unit and discriminator unit 510, 520.

The architecture described above is a generic architecture of a GAN and multiple neural networks of different types may be used alone or grouped with other neural networks to construct the generator 510 and the discriminator 520, and different cost functions may also be provided in order to determine the cost that is backpropagated to the generator and to the discriminator to improve their effectiveness and suitability.

With reference to the GAN (Generative Adversarial Network) described above, it is important to consider that this algorithm is not used to generate images, as in classical digital literature, but to generate and validate combinations of navigation commands.

From the foregoing, it is evident that the generator 510 creates simulated values of the command signals (e.g. steering, power, forward/reverse gear, trim, stabilizers, etc.), while the discriminator 520 evaluates these values and establishes whether they represent a realistic and usable combination in light of the empirical data stored in the knowledge base 530 and the generated commands are accepted or discarded as a function of this analysis.

The two modules, respectively generator and discriminator, are trained iteratively by means of the cost functions 560-580.

In other words: the GAN serves not only to generate commands on the basis of the input data, but at the same time to prevent the control algorithm from navigating "blindly", ensuring that the generated commands are consistent with what can actually happen on board.

In particular, the generator receives as input a Data In vector (current navigation condition) and produces a simulated Data Out vector, that is a possible combination of command signals attempting to imitate a real control action, as if it were produced by a pilot or by an expert system.

The generator does not produce commands at random; it is trained using the data of the empirical database and the feedback of the discriminator.

The Discriminator is the critical part for real navigation. The discriminator in fact receives from the generator a vector of simulated commands and compares it with the database of real cases 530, which contains inputoutput combinations observed on real vessels, with qualitative labels (good, acceptable, poor) and establishes whether the proposed combination is:

realistic,
consistent with the physical dynamics of the vessel,
useful for guiding toward the target condition.

In case of a positive outcome, the combination is accepted and may be applied to the vessel.

In case of a negative outcome, it is discarded and used to punish (in the sense of back propagation) the generator.

The punishment mechanism of the GAN may operate thanks to the cost functions 560 to 580 which are configured to penalize the generator if it produces unrealistic or unuseful commands or to penalize the discriminator if it makes classification errors.

The GAN, even when used independently of other AI algorithms as will be described in an embodiment hereinafter, acts as an "intelligent filter":

The generic AI proposes commands (Generator).
The Discriminator checks that:

they are not physically impossible (e.g. bringing the engines to conditions incompatible with the dynamics of the boat),
they do not violate safety,
they do not derive from rare or dangerous "outlier" states,
they are consistent with the learned maneuvering patterns.

Only the control combinations approved by the Discriminator can reach the actuators.

An example of training a GAN according to the described embodiment provides for several phases:

- a phase of preparation of the database 530, also called "ground truth", which according to the described embodiments contains:

    - One or more real input data: $PCN_1...PCN_n$ (position, route, wind, currents, trim, loads, etc.)
    - One or more real output data: $SCOA_1...SCOA_n$ (actual steering, actual power, actual trim, etc.)
    - One or more target states (PCNT): target position, target route, target trim.

- One or more quality parameters of the obtained maneuver (class): such as, for example, "good", "acceptable", "dangerous".

- A phase of inputting the aforesaid data to the generator.

The generator takes a vector:

Data In m = { PCN(m), SCOG(m), PCNT(m) }
that is:

- actual condition of the vessel (state m),
- command signals issued by the user or by the operating units,
- target conditions to be reached.

On the basis of these data, the generator must learn a mapping:

Data In $\rightarrow$ Data Out (SCOA m+1)
that produces commands consistent with the actual dynamics.

- A phase of producing a combination of simulated commands

On the basis of the input data, the generator creates the output data:
SCOA(simulated) = {steering_simulated, power_simulated, gear_simulated, trim_simulated, stabilization_simulated}

These values are control attempts, not yet validated.

- A phase of evaluation of the simulated commands by the discriminator

The discriminator receives the simulated commands SCOA(simulated) from the generator.
It evaluates:

1. Physical consistency
2. Consistency with real cases
3. Effectiveness in approaching the target
4. Compatibility with multi-unit dynamics

On the basis of:

- DATABASE 530 containing real cases
- the quality classes (good/acceptable/poor)

The discriminator outputs:

Value 1 if the simulated commands are considered realistic and acceptable
Value 0 if the simulated commands are discarded.

- A phase of calculating the cost functions

Discriminator Cost (Loss_D):

The discriminator is "punished" when:

- it accepts false outputs of the generator ("false positive"),
- it rejects real outputs of the database ("false negative").

Generator Cost (Loss_G):

The generator is punished when:

- it produces commands recognized as "fake",
- it produces commands incompatible with the physics of the vessel,
- it produces commands that are detrimental to the navigation quality.

The aforesaid steps are illustrated in blocks 560, 570, 580 of Figure 4.

- A back-propagation phase

The discriminator provides error signals to the generator which updates the network weights to improve the simulation.

The discriminator updates its own weights to improve its discrimination capability.

The cycle continues until:

- the generator produces realistic actions,
- the discriminator becomes highly accurate in identifying non-acceptable simulated commands, so-called "fake".

At the end of the training process described above, the trained GAN is used in navigation and:

1. The Generator proposes the next move.
2. The Discriminator validates or discards it.
3. If validated → the control unit sends the commands to the actuators.

The configuration of the GAN according to the described embodiment introduces into the system a sort of "safety loop", in that every command must mandatorily pass through the Discriminator before being used in the real application.

If the command fails validation, it re-enters the Generator, which must improve it, and it is never sent to the actuators.

If the command passes validation, then it passes to the command module and may be used in the simulation or in real control.

This architecture prevents the vessel from receiving dangerous commands and makes the learning safeby-design.

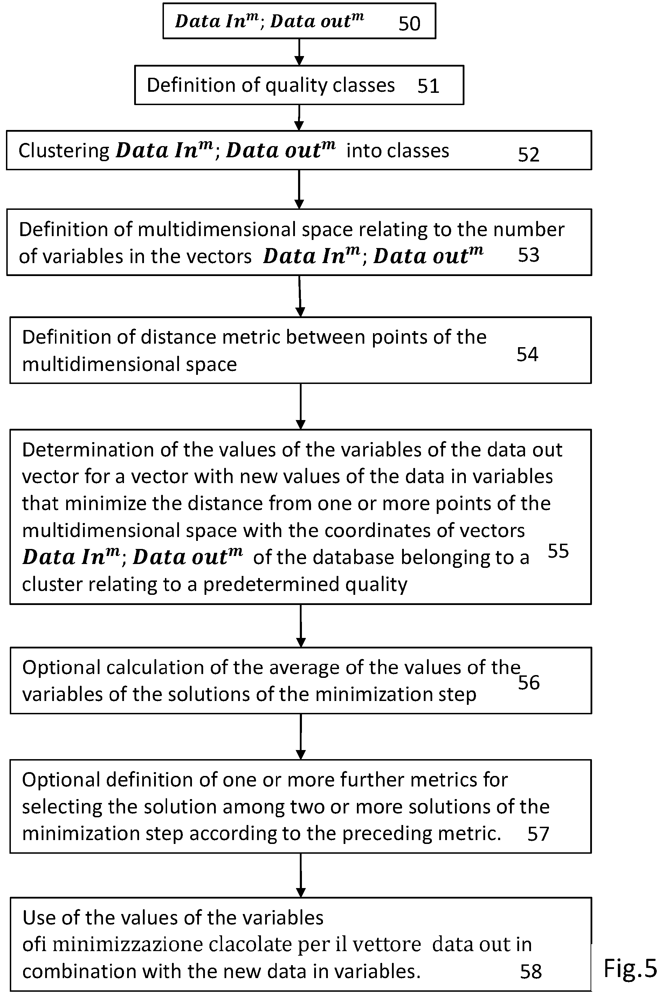

With regard to said digital model, Figure 5 shows a further embodiment of an artificial intelligence algorithm that is based on the use of a database with input data and output data according to one or more of the preceding definitions, which input data and output data are combined into data vectors of a so-called ground truth database and to each of which vectors a quality classification of the navigation control condition is associated on the basis of a plurality of different defined quality classes. This is shown by steps 50 and 51. The data of database 50 are clustered into the different classes as indicated at step 52. At step 53, a multidimensional space is defined in which each data vector 51 relates to a point in said space. Furthermore, a metric for determining a distance between the points in said multidimensional space is defined as indicated at step 54.

The determination of the values of the variables of the output data vector for a new input data vector takes place by means of minimizing the distance between the points defined by the data of the vectors at step 51 and the vector that contains only the values of the new input variables as indicated at step 55.

The minimization may take place using different types of minimization algorithms, such as the least squares algorithm or other more complex algorithms.

When the result of the distance minimization were to involve one or two or more alternative solutions that satisfy the same minimization conditions, then an optional step 56 of calculating average values of the same variables of the two or more different solutions may be provided. Such average values may also be calculated in the form of weighted averages or by means of different averaging algorithms.

Still with reference to an optional step that may be provided either alternatively to step 56 or in combination therewith, at step 57, one or more different metrics may optionally be defined that allow the discrimination among one or more equivalent solutions of the metric minimization step according to step 55.

Once the values of the output data resulting from said one or more steps 55 to 57 have been defined, these values may be provided by the control unit to be applied as output data for the actuation command of the actuators of one or more control members and/or the possible and optional data on the operating state at the instant subsequent to the initial state m or in the final state m+1 of the system according to, for example, what has been described above and in particular with

reference to the examples of Figures 2 and 3.

A still further embodiment provides for the use as artificial intelligence algorithm of a reinforcement learning algorithm.

The Q-learning algorithm is one of the so-called reinforcement learning algorithms and allows an autonomous agent to learn the optimal mode of action through iterative exploration of the environment, without the need for predictive models or historical data.

This methodology is based on the acquisition of direct experience, evaluating the consequences of the actions taken and optimizing future decisions on the basis of the results obtained.

In the present case, for example, in a navigation condition defined by the values of the variables provided in a Data In vector according to one or more of the embodiments described above, the combination of one or more Data Out variables according to one or more of the preceding definitions may be subject to rewards or penalties depending on the actual outcome on the navigation conditions.

The evaluation of the actual outcome in a qualitative sense may be determined by evaluating the differences of the navigation condition defined by the target values with the actual navigation condition that has been reached following the actuations of the actuation actuators of one or more predetermined control members. Such differences between the target condition and the actual condition obtained allow an objective quality indication factor of the solution used to be calculated. The algorithm evaluates a series of possible actions in relation to different states corresponding to the navigation conditions defined by different values of the Data In variables. For each state-action combination, that is values of the Data In variables and values of the Data Out variables, the algorithm assigns a "reward" based on the effectiveness of the action in reaching a target navigation condition.

From a general conceptual standpoint, the following quantities are considered:

- State (S): The navigation condition defined by one or more variables of the Data In vector that describe the values of one or more corresponding characteristic parameters for describing said condition and in which the system is located.
- Action (A): The definition of the possible values for one or more variables of the Data Out vector and relating at least to the actuation signals of the actuators of one or more control members and/or to the further signals of the preceding embodiments of Figures 2 and 3.
- Reward (R): The feedback obtained from the environment in response to the actions of the agent, that is the actual navigation condition obtained with the action as defined above.
- Policy ($\pi$): The strategy that the agent follows when mapping states to actions.
- Value Function (V): An estimate of the expected value starting from a state and following a certain policy.
- Q Function (Q): An estimate of the expected values of the Data Out vector variables relating at least to the actuation signals of the actuators of one or more control members and/or to the further signals of the preceding embodiments of Figures 2 and 3.

The Q-learning algorithm focuses on the Q function, which associates to each state-action pair (s, a) a value Q(s, a). This value represents the quality (hence the name "Q") of action a in state s, that is the expected value of the cumulative rewards obtained by taking action a in s and following the optimal policy thereafter.

To obtain (and understand) the update formula of the Q-learning algorithm, several intermediate states have been gone through. Consider the Bellman Equation, in which all possible actions are considered and the one that produces the V(s) maximum value is executed, given a determined state s:

$$V(s) = \max_a \left(R(s,a) + \gamma V\left(s'\right)\right)$$

Where $\gamma$ represents the discount factor ($0 \leq \gamma < 1$), which balances the importance of future rewards with respect to immediate ones.

Subsequently, the equation was extended by introducing the Markov Decision Process:

$$V(s) = \max_a \left(R(s,a) + \gamma \sum s' P\left(s,a,s'\right) V\left(s'\right)\right)$$

In which the following factors were added:

- probability of going from a state s to a state s' through action a

$$P\left(s,a,s'\right)$$

- weighted sum of the possible states to which it is possible to go.

$$\sum_{s'} P\left(s, a, s'\right) V\left(s'\right)$$

To obtain a measure of the quality of a single action given a determined state, the max function is eliminated, and the Q function is thus obtained:

$$Q(s,a) = R(s,a) + \gamma \sum_{s'} \left(P\left(s, a, s'\right) V\left(s'\right)\right)$$

Bringing everything as a function of Q:

$$Q(s,a) = R(s,a) + \gamma \sum_{s'} \left(P\left(s, a, s'\right) \max_{a'} Q\left(s', a'\right)\right)$$

It is furthermore important to introduce the concept of temporal difference (TD): it is the component that serves the agent to calculate the Q-values depending on the changes of the environment over time. It is considered that the agent knows the value of the Q-value of the position in which it is located after having performed an action. By recalculating the same Q-value, evidence may emerge on the random changes of the system (since we are in a stochastic environment). The temporal difference of Q(s, a) is given by:

$$TD(a,s) = \underbrace{R(s,a) + \gamma \sum_{s'} \left(P(s,a,s') \max_{a'} Q(s',a')\right)}_{\text{New } Q(s,\,a)} - Q(s,a)$$

Therefore, the formula Q(s, a) is updated in this manner:

$$Q_t(s,a) = Q_{t-1}(s,a) + \alpha TD_t(a,s)$$

$$Q(S_t, A_t) \leftarrow Q(S_t, A_t) + \alpha[R_{t+1} + \gamma max_a Q(S_{t+1}, a) - Q(S_t, A_t)]$$

Where $\alpha$ represents the learning rate ($0 < \alpha \leq 1$).

Initially, a table, called Q-table, is initialized with arbitrary values (usually null). The agent then proceeds through a random exploration process, and at each step, chooses an action, observes the reward, and updates the Q-table using the update formula. Thereafter, the agent chooses the subsequent action that maximizes the Q value for the current state, called Q-value. This iterative process continues until an optimal action policy is obtained, which guides the agent toward the decisions that optimize the achievement of the desired and/or optimal navigation conditions.

The Q-learning method through Q-table, however, finds limitations in its application to complex or largescale environments, due to the high memory consumption and the long calculation times required. In response, an approach may be used that exploits Deep-Q-Learning, which integrates the capabilities of a neural network in order to effectively manage large volumes of data and continuous action spaces, thus overcoming the limitations of the traditional Q-table.

The neural network, constituted by different layers of neurons, including input layer, hidden layer, and output layer, acts by means of the weighted transmission and processing of signals between the neurons. The back propagation process allows the adjustment of the weights on the basis of the results obtained, optimizing the network for the prediction of the most effective actions.

According to a further feature, the input data, in addition to the target data of the navigation conditions, may comprise combinations of characteristic parameters of the navigation conditions in which combinations said parameters have predefined values that have been defined upstream according to criteria of optimal behavior or of setting an optimal navigation condition.

In this case, these combinations may represent standard navigation conditions that may be correlated to certain

values of the environmental conditions and/or of the configurations of the navigation control systems and the algorithm may provide for comparison steps of the target conditions and/or of the actual conditions obtained with these standard conditions and generate in back propagation correction processes of the combinations of actuation signals of the actuation actuators of one or more navigation condition control members provided by the AI algorithm.

Figure 7 refers to a system according to the present invention that provides for a combination of the algorithms previously described in the embodiments that provide for only one of these algorithms.

In general, the navigation control system of a vessel according to Figure 7 provides for
a control unit configured to:

a) acquire input data vectors relating to characteristic parameters of the navigation condition, comprising at least one of:

- steering state,
- propulsion power,
- direction of travel,
- operating state of trim adjustment units of the vessel,
- environmental or operating state parameters of the sensors of the vessel;

b) execute an artificial intelligence algorithm configured to generate command signals intended for at least two of: steering unit, forward/reverse/neutral gear control unit, propulsion power regulation unit, trim adjustment unit of the vessel, gyroscopic stabilizers;
c) in which the artificial intelligence algorithm comprises at least one of:

- a digital model in which each navigation condition is represented as a point in a multidimensional space, having one dimension for each characteristic parameter of the input and output data,
- an output data selection process obtained by minimizing a distance metric between the point representing the input values and the points of a database of known cases classified on the basis of the quality of the navigation obtained;

d) a reinforcement learning algorithm configured to determine the command signals of multiple operating units as a function of the reward calculated on the basis of the difference between target conditions and actual conditions achieved;
e) a GAN architecture comprising a generator that produces possible output vectors and a discriminator trained to evaluate whether such vectors are compatible with real or optimal navigation conditions;
f) in which the control unit provides, as output, command signals intended for the actuators of said operating units to achieve a target navigation condition.

**Figure 7 shows an example of integration of the** Reinforced Learning algorithm with a GAN algorithm.

At step 700, the state of the vessel defined by the parameters PCN and SCN is provided according to, for example, the definitions made in the preceding description and which relate, for example, to one or more of the following conditions:

- route,
- rudder angle,
- engine power,
- trim,
- wind/current parameters,
- roll/pitch,
- selected navigation mode.

The parameters PCN and SCN descriptive of the navigation conditions define the Data-In vector according to one or more of the variants described above.

The Reinforced Learning algorithm does not define a single command but a combination of commands according to one or more of the embodiments defined by the "SCOA" variables described above and which refer to one or more of the commands of:

- steering
- power

- gear (forward/reverse/neutral)
- trim tab/interceptor
- gyroscopic stabilizers

The Reinforced Learning RL algorithm provides a complete vector of optimal actions, for example using the Q-Learning algorithm described above.

The reward (R) derives from the target parameters and is calculated on the difference between:

- target condition (PCNT)
- actual condition obtained (PCN')

Examples of reward may be numerical values of the parameter R:

- $R > 0$ if the vessel approaches the desired route
- $R > 0$ if roll decreases
- $R < 0$ if the maneuver creates dangerous conditions.

The reinforced learning algorithm alone is not completely safe, because it may generate:

- physically impossible actions,
- excessively abrupt steering,
- incoherent combinations (e.g. wrong trim),
- dangerous maneuvers.

The Reinforced Learning algorithm therefore produces a combination of commands that represents the best command action from a mathematical standpoint.

The steps described above are summarized in the box indicated by 710.

At step 720, the Generator of the GAN is executed which produces a simulated version potentially consistent with the state of the vessel and with the action, that is the combination of commands proposed by the Reinforced Learning algorithm at the preceding step 710.

The output of the Generator is provided at step 730 to the Discriminator which verifies the combination of commands simulated by the Generator from the standpoint of the realism (true or fake) and of the safety of the command action obtained with said commands simulated by the Generator.

The output of the Discriminator may validate the commands simulated by the Generator as "True" and therefore applicable to the vessel, or it may consider said simulated commands as "fake", that is not acceptable in that they do not satisfy one or more of the preceding conditions, namely commands that produce physically impossible actions and/or excessively abrupt steering and/or incoherent combinations of commands (e.g. wrong trim) and/or dangerous maneuvers. In this case, as shown by arrow 770, the Reinforced Learning algorithm is again activated to generate a new combination of commands corresponding to a new navigation control action and the GAN generator is subsequently activated at step 720 and the GAN Discriminator at step 730.

The loop constitutes a "Safety Loop" that repeats steps 210 to 730 until the outcome of the discriminator evaluation considers the commands simulated by the generator as equivalent to real commands.

The function of the Safety Loop is therefore important because it prevents command signals from being provided to the actuators of the various navigation condition control members, which may cause, for example, one or more of the following conditions listed in the following non-exhaustive list:

- actuator saturation,
- steering incompatible with the trim state,
- physically unrealizable engine settings,
- trim inconsistent with pitch,
- over-commands that destabilize the boat.

As shown at step 750, the combination of commands considered acceptable by the discriminator and that has therefore passed the Safety Loop 740 is provided as input to a multidimensional digital model, for example such as the one previously described.

The multidimensional digital model selects the best solution and

1. Receives the action, that is the command signals simulated by the GAN and validated by the Discriminator and by

the safety loop at steps 730 and 740;
2. Compares the combination of said simulated and validated signals with "high quality" solutions of the database
3. Minimizes a metric distance between the combination of the simulated and validated signals and combinations of said commands labeled as "high quality" solutions
4. Provides the final action, that is the final commands to the actuators for executing the maneuver determined by said commands.

As is evident, the multidimensional digital model in combination with the metric constitutes a sort of further, third level of safety in determining the commands for governing the vessel.

With regard to the multidimensional digital model, the quality classes of the individual vectors that combine the input data and the output data defined according to one or more of the preceding embodiments may, for example, be defined as follows:

- Class A = excellent navigation
- Class B = good navigation
- Class C = acceptable
- Class D = poor/unstable

It is possible to define one or more metrics for determining the distance between:

- the (input/output) combination proposed by the GAN in combination with the Reinforced Learning RL algorithm, and
- the ideal solutions present in Class A.

As already indicated above, examples of metrics may be:

- Euclidean distance,
- weighted distance,
- metric defined on clusters (k-means).

The digital model selects the optimal action by choosing the output vector that minimizes the distance between the current solution and the ideal solution recorded in the database. This means that among the safe actions approved by the GAN, the digital model chooses the one closest to the best real behaviors recorded and constitutes a form of predictive control based on real experience.

If the minimum distance produces multiple equivalent solutions, the digital model may calculate an average of the command variables or apply additional metrics (secondary, tertiary) to discriminate.

As is evident from the foregoing with reference to the combination of the three algorithms GAN, Reinforced Learning, and multidimensional Digital Model and to the "Safety Loop", the functions of the different algorithms in defining combinations of commands of operating units for controlling the navigation state of a vessel may be summarized as follows:
The Reinforced Learning algorithm proposes a strategically useful maneuver elaborated from a strictly mathematical standpoint.

The GAN filters a solution that may be considered realistic and safe from among those defined by the Reinforced Learning algorithm.

The multidimensional Digital Model optimizes by choosing, among all the safe maneuvers, the one that is closest to the best maneuvers ever performed and documented in the "Ground Truth" database.

## Claims

**1.** Navigation control system of a vessel, said system comprising operating units configured to perform essential navigation control operations, said operating units comprising:

- at least one steering unit of the vessel for setting a route comprising one or more rudders and/or one or more propulsion jet directing members of the propulsion jet or jets generated by a propulsion system provided with at least one engine or with two or more main engines and optionally also with one or more auxiliary directional engines;
- at least one unit for controlling the condition of forward gear, reverse gear, and neutral of said propulsion system and at least one unit for regulating the propulsive thrust generated by the propulsion unit, that is by said at least

one engine or by said two or more engines both in a synchronized manner and in an independent manner;
- one or more trim adjustment units of the vessel that modify the static and/or dynamic floating trim of the hull in the water;
- a control unit that processes the signals of one or more command signal generating members of said units, generating actuation signals of one or more actuators and/or of one or more control members configured to influence one or more of said navigation conditions relating to the steering of the vessel, to the condition of forward/reverse gear or neutral of the propulsion unit, that is of said at least one engine or of said two or more engines and/or of the thrust power delivered by said propulsion unit, that is of said at least one engine and/or of said two or more engines and of the setting of the dynamic trim adjustment unit or units of the vessel;
- in said control unit being loaded and executed by said control unit a control software that comprises the instructions for calculating the actuation signals of one or more actuators of one or more of said operating units for controlling the navigation conditions as a function of one or more of said command signals generated by means of said command signal generating members by means of an artificial intelligence algorithm,

and wherein

said control unit comprising a communication interface with at least one or more sensors for measuring characteristic parameters of the navigation conditions relating to the vessel and/or relating to the external environment and said artificial intelligence software is configured to calculate the power signals of the actuators of said control members of said operating units for controlling steering and/or for forward gear, reverse gear, and neutral of said propulsion system and at least one unit for regulating the propulsive thrust generated by the propulsion unit, that is by said at least one engine or by said two or more engines both in a synchronized manner and in an independent manner and of said trim control members of the vessel also as a function of the signals of the sensors for measuring said characteristic parameters of the navigation conditions,
which artificial intelligence software comprises an artificial intelligence algorithm constituted by at least one of:

a digital model in which each navigation condition is represented as a point in a multidimensional space, having one dimension for each characteristic parameter of the input and output data,
an output data selection process obtained by minimizing a distance metric between the point representing the input values and the points of a database of known cases classified on the basis of the quality of the navigation obtained;
and/or a reinforcement learning algorithm configured to determine the command signals of multiple operating units as a function of the reward calculated on the basis of the difference between target conditions and actual conditions achieved;
and/or a GAN architecture comprising a generator that produces possible output vectors and a discriminator trained to evaluate whether such vectors are compatible with real or optimal navigation conditions;
and wherein the control unit provides, as output, command signals intended for the actuators of said operating units to achieve a target navigation condition.

**2.** System according to claim 1, **characterized in that** it also comprises stabilization units of the vessel with respect to pitch and/or roll movements, such as gyroscopic stabilizers configured to operate on vessels also of small and/or medium dimensions, said optional gyroscopic stabilization units being provided with a communication interface with said control unit, the control software comprising instructions for generating control signals of said stabilization units generated as a function both of the command signals of the operating units for steering and/or for forward gear, reverse gear, neutral, for regulating the propulsion power and of the trim adjustment units and/or also of said one or more parameters of the navigation conditions measured by said sensors.

**3.** System according to claim 1 or 2, **characterized in that** the operating units comprise sensors for detecting the operating state thereof, such as, for example, a steering angle, a position of the command lever setting actuator of the gear condition of the engine or engines of the propulsion unit, the angular position of the command lever that generates the propulsion power regulation signals and/or of the actuators for actuating the member of the engine or engines for setting the delivered propulsion power, the operating condition of the trim adjustment unit or units, such as, for example, the angle of a trim tab with respect to the hull of the vessel and/or the operating conditions of stabilization members and/or sensors for measuring the rate of variation of said operating conditions of said operating units and wherein
the control unit is provided with a communication interface with said sensors and the artificial intelligence algorithm is configured to calculate the actuation signals of said one or more actuators of the control members of the steering unit or units, of the unit or units for setting the direction of travel or neutral, of the unit or units for setting the propulsion

power, of the stabilization unit or units and/or of the trim condition or conditions of the vessel and/or of one or more of the optional additional operating units for controlling the navigation conditions also as a function of said operating state and/or rate of variation signals of said operating units and/or of the actuators and/or of the control members thereof.

**4.** System according to one or more of the preceding claims, wherein the command signals generated by command signal generating members and calculated by the algorithm are suggested to an operator and are at least partially executed manually by the same, or said command signals and/or said actuation signals of the actuators of one or more control members generated by the navigation control system are applied to the corresponding actuators and/or control members regardless of a manual operation by the operator of the corresponding command signal generating members.

**5.** System according to one or more of the preceding claims, wherein the AI algorithm is a machine learning algorithm trained by supervised or unsupervised training, such as a neural network or a combination of neural networks.

**6.** System according to one or more of the preceding claims 1 to 5, wherein the AI algorithm is a deep learning algorithm of the so-called GAN type, said algorithm comprising

- a generator configured to produce simulated output vectors for possible navigation maneuvers,
- a discriminator trained with experimental and/or empirical data that determines whether the produced vectors are realistic,
- a cost function for the iterative training of the generator and of the discriminator.

**7.** System according to one or more of the preceding claims 1 to 5, wherein the AI algorithm is a reinforcement learning algorithm such as an algorithm called Q-Learning.

**8.** System according to claim 7, wherein said reinforcement learning algorithm comprises a reward function based on the difference between:

- target values of the navigation parameters,
- and actual values obtained by applying the command signals to the actuators of the operating units.

**9.** System according to claim 7 or 8, wherein the reward function is weighted on the parameters of:

- stability of the vessel,
- energy consumption,
- speed of reaching the target condition.

**10.** System according to one or more of the preceding claims, wherein the AI algorithm is a digital model in which the navigation conditions correspond to points in a multidimensional space having one dimension for each of a plurality of characteristic parameters of the navigation condition and/or of the command signals and/or of the actuation signals of the actuators, a solution being calculated by minimizing the distance of a point for which only some of the values of said parameters and/or command signals and/or actuation signals of the actuators are available with respect to known solutions for which the values of all the parameters and/or the command signals and/or the actuation signals of the actuators are available.

**11.** System according to claim 10, wherein said digital model comprises:

- a database of known cases containing combinations of input and output vectors associated with navigation quality values,
- a clustering algorithm for clustering the known cases into quality classes,
- a metric configured to measure the distance in the multidimensional space between a new input vector and the vectors belonging to the highest quality classes.

**12.** System according to claim 10 or 11, wherein the output solution is generated by means of:

- minimization of one or more distance metrics,
- and, where multiple solutions are equivalent, by calculating a weighted average or by applying one or more additional discriminatory metrics.

**13.** System according to one or more of the preceding claims, wherein the machine learning algorithm comprises in combination:

a) a digital model in which each navigation condition is represented as a point in a multidimensional space, having one dimension for each characteristic parameter of the navigation and/or of the command signals and/or of the actuation signals of the actuators;
b) a distance metric defined in the multidimensional space and a distance minimization algorithm configured to select, for a new input vector, an output vector corresponding to the solution present in the database having the highest quality classification;
c) a GAN architecture comprising a generator configured to produce simulated values of the command signals and a discriminator configured to determine, on the basis of a database of known cases, whether such simulated values are realistic and usable as actual command signals;
d) a validation loop in which the simulated command signals are accepted only if classified as real by the discriminator, while the non-accepted signals are discarded and used for the iterative training of the generator and of the discriminator;
e) optionally, a reinforcement learning algorithm configured to generate candidate actions as a function of the reward based on the difference between the target navigation conditions and the conditions actually achieved, the outputs thereof being subjected to validation through GAN and subsequently optimized by the digital model, and wherein

the control unit provides as output the validated and optimized signals intended for the actuators of the operating units of the navigation.

**14.** System according to one or more of the preceding claims, wherein the characteristic parameters of the navigation conditions are constituted by one or more of the following parameters:

| Environmental conditions | Characteristic parameters |
|---|---|
| Wave motion | frequency, amplitude, direction |
| Wind | Intensity, direction |
| Currents | Intensity, direction |
| Geographical conditions | |
| Position | Geographic coordinates;<br>Distance from fixed obstacles and direction toward them;<br>Distance from and direction toward buoys or similar;<br>Distance from and direction toward moving points;<br>Distance from and direction toward generic target points |
| Orientation | Route direction along which the vessel is moving;<br>Cardinal orientation of the longitudinal axis (bow-stern) of the vessel;<br>Variation and variation rate of the orientation of the longitudinal axis;<br>Variation and variation rate of the route direction |
| Motion and/or trim and/or stability conditions | |
| Motion | Navigation speed;<br>Pitch oscillation: frequency and amplitude;<br>Roll oscillation: frequency and amplitude |

And optionally also parameters relating to the operating state of the various control units of the vessel

| | |
|---|---|
| Operating state of navigation control units | Position and/or variation of position of steering unit(s);<br>Gear direction/neutral condition and/or variation of gear direction and/or neutral condition of the propulsion system and of the individual engines, i.e. of the propellers and/or jets when the propulsion unit comprises two or more main propulsion engines and/or at least one auxiliary maneuvering engine;<br>Set propulsion power and/or variation of propulsion power, i.e. of the rotational speed of the propellers and/or of the jet speed when the propulsion unit comprises two or more main propulsion engines and/or at least one auxiliary maneuvering engine;<br>Operating state of trim adjustment units such as trim tabs or the like and/or variation of said operating state; Operating state of stabilization units;<br>Set operating state and/or variation thereof of units for regulating the position and/or orientation of the propeller axis and/or of the jet axis with respect to the hull, so-called jack plates comprising at least one degree of translational freedom of said axis with respect to the hull, preferably at least two or three translational degrees along three axes respectively parallel to the longitudinal axis of the vessel, the transverse beam-to-beam axis, and the vertical transverse axis and/or at least one rotational degree of freedom around one of said axes, preferably around two or more of said axes (trim, tilt) ;<br>State of selection of predefined navigation modes (leisure cruise, fast cruise, docking maneuver, drift, dynamic positioning, electronic anchor) . |

**15.** System according to one or more of the preceding claims, wherein said parameters may further include parameters defining a desired (target) condition of the vessel, constituted by one or more of the parameters from the following list:

Parameters describing a target geographic point;
Parameters describing a target route;
Parameters describing a target orientation of the vessel during movement along the target route;
Parameters describing a target stabilization condition (maximum roll and/or pitch thresholds);
Parameters describing a target trim of the vessel and/or a target trim of the main and/or auxiliary propulsion unit engines with respect to the hull;
Parameters describing a preselected navigation condition.

**16.** System according to one or more of the preceding claims, wherein the algorithm is trained or constructed based on data from a training database consisting of a plurality of records, each record being composed of a combination of variables each relating to a parameter from a plurality of parameters describing an initial navigation condition and/or a desired navigation condition and/or a parameter from a plurality of parameters describing command signals generated by one or more command signal generating members and/or a parameter from a plurality of parameters describing the state of one or more actuators of one or more control members, the values of which parameters relate to real experimental and/or empirical cases.

**17.** System according to one or more of the preceding claims, wherein the training database of the artificial intelligence algorithm is generated by means of domain adaptation, transferring training data from a first type of vessel to a second type by means of transformations performed by artificial intelligence algorithms.

**18.** System according to one or more of the preceding claims, wherein further synthetic records are generated by means of genetic algorithms and/or data augmentation techniques.

**19.** Method for controlling the navigation conditions of a vessel in combination with a system according to claim 1, the method comprising the steps of:

a) collecting data records relating to actual navigation conditions;
b) constructing a training database for an artificial intelligence algorithm by means of real data and/or synthetic data and/or domain adaptation;
c) providing the AI model with an input vector relating to the current navigation condition;
d) calculating one or more output vectors by means of:

- distance minimization in a multidimensional space, and/or

- reinforcement learning, and/or
- GAN architecture;

e) applying to the respective actuators the command signals of the selected output vector.

Fig. 1
1
2
3
9’
10’
24
12
31
29
22
21
20
13
8
28
30
11
14
15
17
16
25
25
4
26
23
26
101
9
10
05
06
05
06
100
7

Input Signals 70
Operating state signals $SOG_i^m$ of: Steering signal generating member; Forward, reverse, or neutral gear control members; Engine propulsion power setting members; Trim adjustment member command signals 72
Environmental navigation condition signals measured by onboard sensors and/or received from external sources $SCN_i^m$ 71
Operating state signals of actuation actuators and/or control members $SAO_i^m$ 73
Target navigation condition parameters $PCNT_i^m$ 74
Control Unit 8
Input Signals 81
Processor 80
Program Algorithm AI processing 83
Knowledge database upgrade 88
Knowledge base Algorithm 84
Actuator Actuation signals 85
Warning and/or display signals 87
Command signals of actuation actuators and/or control members $SCAO_i^m$ For steering; Forward/reverse/neutral gear of engine/engines; Engine power setting; Trim adjustment device setting 86
Operating state signals of actuation actuators and/or control members $SAO_i^{m+1}$ 91
Operating state signals of command signal generating members $SOG_i^{m+1}$ 92
Environmental navigation condition signals measured by onboard sensors and/or received from external sources $PCNT_i^{m+1}$ 93

Fig. 2

30
31
32
33
34
One or more intermediate layers each with a predetermined number of nodes and which nodes are connected with a predetermined number of connections
$PCN_1^m$
$PCN_2^m$
$PCN_3^m$
$PCN_4^m$
$PCN_5^m$
$PCN_{6,p}^m$
$PCN_7^m$
$PCN_8^m$
$PCN_9^m$
$PCN_{10}^m$
$PCN_{11}^m$
$PCN_{12}^m$
$PCN_{13}^m$
$PCN_{14}^m$
$PCN_{15,q}^m$
$PCN_{16,z}^m$
$PCN_{17,p,v}^m$
$PCN_{18}^m$
$PCN_{19}^m$
$PCN_{20}^m$
$PCN_{21}^m$
$PCNT_1^{m+1}$
$PCN_2^{m+1}$
$SCOA_3^{m+1}$
$SOA_3^{m+1}$
$SCOA_4^{m+1}$
$SOA_4^{m+1}$
$SCOA_5^{m+1}$
$SOA_5^{m+1}$
$SCOA_{6,p}^m$
$SOA_{6,p}^m$
$PCNT_7^{m+1}$
$PCNT_8^{m+1}$
$PCNT_9^{m+1}$
$PCNT_{10}^{m+1}$
$PCNT_{11}^{m+1}$
$SCOA_{12,q}^m$
$SOA_{13,q}^{m+1}$
$PCNT_{14,z}^{m+1}$
$SCOA_{15,z}^m$
$SOA_{16,z}^{m+1}$
$SCOA_{17,p,v}^m$
$SOA_{18,p,v}^m$
$PCNT_{19,p,v}^{m+1}$
$PCNT_{20}^{m+1}$

Fig. 3

Cost Generator 570
Cost Discriminator 580
Validated synthetic output data 540
False synthetic output data 550
Cost function 560
Discriminator 520
Generator of synthetic, simulated output data 510
Training database 530
Input Data 500

Fig.4

$Data\ In^m; Data\ out^m$ 50
Definition of quality classes 51
Clustering $Data\ In^m; Data\ out^m$ into classes 52
Definition of multidimensional space relating to the number of variables in the vectors $Data\ In^m; Data\ out^m$ 53
Definition of distance metric between points of the multidimensional space 54
Determination of the values of the variables of the data out vector for a vector with new values of the data in variables that minimize the distance from one or more points of the multidimensional space with the coordinates of vectors $Data\ In^m; Data\ out^m$ of the database belonging to a cluster relating to a predetermined quality 55
Optional calculation of the average of the values of the variables of the solutions of the minimization step 56
Optional definition of one or more further metrics for selecting the solution among two or more solutions of the minimization step according to the preceding metric. 57
Use of the values of the variables ofi minimizzazione clacolate per il vettore data out in combination with the new data in variables. 58

Fig.5

A
B
C
CF
D
E
F
G
H
I
J
K
L

Fig. 6

Vessel state
700
PCN, SCN,....,...
Optimized action
710
Reinforcement Learning (RL)
Q-learning / Deep-Q-learning
- Reward based on:
stability
Consumption
target achievement
(SCOA_simulated)
720
GENERATOR (GAN)
Proposes a simulated maneuver consistent with the state + RL action
True/False
730
DISCRIMINATOR (GAN)
Compares (SCOA_simulated) with real database and validates ONLY realistic and safe maneuvers
SAFETY LOOP
740
if False → RL
Generator recalculates
MULTIDIMENSIONAL DIGITAL MODEL
750
Minimizes distance between current state and known solutions (high quality records)
Commands to devices
760
steering and/or power and/or trim and/or stabilization

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007191138 B
- WO 2019126755 A
- WO 2019126755 A1
- CN 110298450
- WO 2006003132 A
- JP 4791340 B
- US 5881666 A
- EP 3789287 A1
- EP 3241735 A
- EP 3985273 A1
- US 11472521 B2